# EUROPÄISCHE PATENTSCHRIFT

(11) **EP 3 156 857 B1**
(45) Veröffentlichungstag und Bekanntmachung des Hinweises auf die Patenterteilung: **13.01.2021**
(21) Anmeldenummer: 15190236.8
(22) Anmeldetag: 16.10.2015
(51) Int. Cl.: G05B 15/02

(54) **VORRICHTUNG UND VERFAHREN ZUR ÜBERWACHUNG EINES GEBÄUDES**
DEVICE AND METHOD FOR MONITORING A BUILDING
DISPOSITIF ET PROCEDE DESTINES A LA SURVEILLANCE D'UN BATIMENT

(43) Veröffentlichungstag der Anmeldung: 19.04.2017
(73) Patentinhaber: RP-Technik GmbH, 63110 Rodgau (DE)
(72) Erfinder: Pasedag, Roland, 63322 Rödermark (DE)
(74) Vertreter: Cremer, Christian

(56) Entgegenhaltungen:
- US-A1- 2011 061 015
- US-A1- 2014 297 001
- US-A1- 2014 313 032
- US-A1- 2015 160 636

## Beschreibung

Eine erfindungsgemäße Vorrichtung dient insbesondere dazu, Gebäudeteile oder auch Installationen in oder an einem Gebäude dahingehend zu überwachen, dass ab einem bestimmten Zeitpunkt ein kontrollierter Betriebszustand vorliegt. Hierbei können das für die Installation jeweils verantwortliche Personal zur Herbeiführung eines Betriebszustands innerhalb des oder auch - im Einzelfall - des gesamten Gebäudes eingebunden werden. Die vorliegende Erfindung betrifft also eine Vorrichtung zur Überwachung zumindest eines Teils eines Gebäudes oder eines Gebäudekomplexes gemäß dem Oberbegriff von Anspruch 1. Auch betrifft die Erfindung ein geeignetes Überwachungsverfahren, insbesondere für ein Gebäude oder ein Gebäudekomplex, gemäß dem Oberbegriff von Anspruch 20.

### Stand der Technik

Aus verschiedenen Dokumenten zum Stand der Technik gehen Verfahren hervor, bei denen Arbeitsabläufe, z. B. der Arbeitsablauf bei der Montage von einer Maschine, analysiert werden. Auf Grundlage der Analyse soll die Arbeitsorganisation für die Mitarbeiter verbessert werden. Gemäß der Patentanmeldung DE 10 2005 035 805 A1 (Anmelderin: Uhlmann Pac-Systeme GmbH & Co. KG; Anmeldetag: 27.07.2005) sollen Sender Personen und Gegenständen, wie Werkzeugen, zugeordnet werden. Mehrere Empfänger sollen in einem Arbeitsbereich angeordnet werden. Eine Recheneinheit dient dazu, ein zeitaufgelöstes Bewegungsprofil der Sender zu erstellen, um häufige Ortswechsel festzustellen. Ziel sei es, die Ortswechsel möglichst zu vermeiden oder zumindest den Arbeitsablauf genauer dokumentieren zu können. Um eine Position von Einrichtungsgegenständen eines Gebäudes in einem Raum identifizierbar zu machen, wird in den Gebrauchsmustern DE 20 2008 005 338 U1 (Inhaberin: AIZO AG; Anmeldetag 17.04.2008) und DE 20 2009 005 690 U1 (Inhaberin: aizo ag Deutschland; Anmeldetag: 16.04.2009) jeweils vorgeschlagen, ein Ortungssystem mit einem Ortungssignalempfänger zu verwenden. An den Gegenständen sei jeweils Ortungssignalgeber anzubringen. Die Gegenstände sollen auch in Ortungsgruppen, wie eine Ortungsgruppe "Bad", zusammengefasst werden können, um Beziehungen der Gegenstände untereinander erkennen zu können. Als Signalgeber wird z. B. ein sog. Kaltgerätestecker als Netzanschlussleitung eines elektronischen Geräts erwähnt. Die Anmeldeschrift DE 10 2009 017 640 A1 (Anmelderin: aizo ag Deutschland; Anmeldetag: 16.04.2009) konzentriert sich auf die Nutzung von Informationen, die mit der Erfassung der Gegenstände im Gebäude zusätzlich gewonnen werden können, um, z. B. mit Energiemengenbudgets in einem "Facility Management System", auf einen geringeren Energieverbrauch hinzuwirken. Beispielhaft wird das Transportieren einer Kaffeemaschine und das Transportieren eines Diktiergeräts von einem Raum in den anderen diskutiert, wodurch ein zusätzlicher Energiebedarf und eine zusätzliche Gerätebenutzung entstehen, die gesondert abzurechnen seien.

Ein Zeiterfassungssystem für Angestellte gemäß der Patentanmeldung WO 2014/165 250 A1 (Anmelder: Payrollhero.com PTE. LTD; Prioritätstag: 12.03.2013) sieht vor, biometrische Daten eines Angestellten zu einem ersten Zeitpunkt zu erfassen, anhand denen der Angestellte identifiziert wird. Es soll danach ein physiologischer Parameter des Angestellten aus der biometrischen Information extrahiert und die vorhandene Aufzeichnung des Parameters aktualisiert werden. Auch der Zeitpunkt eines Abmeldens soll so erfasst werden. Diese Überwachung soll z. B. dazu dienen, die tatsächliche Anwesenheit besser zu kontrollieren, aber auch die Zufriedenheit, die Laune, den Stresszustand und andere für die Arbeitsproduktivität relevante Faktoren zu erfassen. Den Leser des Dokuments kann die Sorge beschleichen, dass das Erfassungssystem selbst einen Stresszustand herbeiführt.

Die Lokalisierung von Gegenständen oder Personen in einem zu überwachenden Raum soll gemäß der Patentschrift US 3 805 265 A (Inhaberin: RCDS Enterprises, Inc.; Anmeldetag: 06.10.1971) mittels strahlenden Energiewellen erfolgen, wobei für die Zielsuche eine Kodierung des Signals verwendet werden soll.

Ein weiteres, aufschlussreiches System, das in der Patentanmeldung US 2013/246 114 A1 (Anmelder: Mitesh Gala; Anmeldetag: 18.12.2012) beschrieben wird, wendet sich schwerpunktmäßig Fragestellungen von Restaurantbetrieben zu. Die Mitarbeiter sollen z. B. mit einem berührungsempfindlichen Bildschirm als Eingabegerät arbeiten. Jeder Mitarbeiter kann demnach mit einem mobilen, drahtlos mit einem Management-System sowie einem Dateisystem und einer Rechenanlage über ein Netzwerk kommunizierenden Gerät ausgestattet sein. Ein biometrisches Lesegerät kann als Alternative zur Eingabe dienen. Anhand einer "compliance logic" soll die Einhaltung von gesetzlichen Arbeitszeitbestimmungen überwacht und mit einer "scheduling logic" soll das Zeitmanagement, z. B. zur Einhaltung von Pausen, gesteuert werden. Mit einer "performance logic" soll der Mitarbeiter durch zugewiesene Aufgaben gesteuert werden. Der Steuerungsrahmen wird zeitlich durch die Marker "CHECK IN" und "CHECK OUT" begrenzt.

Die Patentanmeldung US 2011/215 911 A1 (Anmelder: T. Cassels, W. Berry; Anmeldetag: 04.03.2010) setzt bevorzugt auf RFIDs (Radiofrequenzgeräte zur Identifikation), um Mitarbeiter zu identifizieren. Die Mitarbeiter tragen jeweils RFID-Anhänger. Ein zugeordnetes Lesegerät befindet sich im Unternehmen. Zum einen soll die Produktivität der Mitarbeiter in einem Unternehmen gesteigert werden. Vorrangig geht es zum anderen jedoch um Time-Tracking-Informationen, d. h. um Bewegungsprofile im Tagesablauf, die erfasst und zur späteren Auswertung gespeichert werden sollen. Bei Büroangestellten sollte das Bewegungsprofil von nachrangiger Bedeutung sein, denn die Arbeitsstätten sind in der Regel ortsfest. Die Patentanmeldung US 2014/ 0313032 A1 offenbart eine Vorrichtung und ein Verfahren zur Überwachung eines Gebäudes.

Um eine Beziehungen zu Gegenständen, Komponenten und Geräten im Umfeld eines einzelnen Mitarbeiters herzustellen und um Workflow-gemäß Arbeitsaufgaben, z. B. über UI-Geräte (die Abkürzung UI steht für "User Interface") wie Smartphones, Mitarbeitern zuzuweisen, wird in der deutschen Patentanmeldung DE 10 2014 103 538 A1 (Anmelderin: Fisher-Rosemount Systems, Inc.; Prioritätstage: 15.03.2013 und 17.09.2013) schwerpunktmäßig ein Prozessleitsystem für verfahrenstechnische Anlagen beschrieben. In dem System kann eine Konfigurationsdatenbank zur Anwendung kommen. Historische Daten und sonstige Datensilos können gespeichert werden. Mit einer Steuerungssoftware bzw. dem Datenbanksystem soll die Umsetzung der Implementierung von einem Big-Data-Konzept möglich sein, wozu Expertensysteme, Überwachungssysteme und kontextsensitive Benutzeroberflächengeräte, also sog. UI-Geräte, zählen. Die mobilen UI-Geräte, wie Laptops, Tablets und Smartphones, sollen je nach Wahl gerätesensitiv und/oder standortsensitiv sein. Die Geräte zusammen mit dem Experten- und dem Überwachungssystem sollen zur automatischen Generierung, Zuweisung und Verwaltung von Arbeitsaufgaben für Aktivitäten von Bediener- und/oder Wartungspersonal genutzt werden. Die Kommunikation erfolgt über ein "Drahtlos-Gateway", wie eine Bluetooth-Verbindung. Das Datenaufkommen umfasst Daten zwischen UI-Geräten, Server und Big-Data-Infrastruktur sowie Daten zu Mitarbeitern, zu Rohstoffen und/oder zu aufbereiteten Produkten, zu Mitarbeiterbeschränkungen, -qualifikationen und -zertifizierungen sowie Daten zu Kalibrierungs- und Wartungszeitplänen. In dem Kommunikationssystem soll ein Überwachungsmodul anhand der empfangenen Daten Arbeitsaufgaben für Anlagenpersonal und/oder zum Verursachen bestimmter Aktionen in der verfahrenstechnischen Anlage erstellen. Daten zu den Auswirkungen der Ausführungen der Arbeitsaufgabe auf den Betrieb der verfahrenstechnischen Anlage werden gespeichert. Bei der Überwachung des Arbeitsablaufs wird allerdings eine Behandlung von Fehlern, die jeweils im Arbeitsablauf, z. B. durch Erschöpfung ferngesteuerter Mitarbeiter, erst entstehen können, nicht berücksichtigt.

### Aufgabenstellung

In einem Wohnumfeld oder in einem Arbeitsumfeld gibt es zahlreiche Installationen, die mittelbar oder unmittelbar von den Tätigkeiten der Bewohner bzw. der Mitarbeiter betroffen sind. Das Arbeitsumfeld erfordert insbesondere auch Routinen, die nicht direkt dem Berufsprofil des Mitarbeiters zuzuordnen sind, und die daher nicht der üblichen Aufmerksamkeit unterliegen. Ähnlich gestaltet es sich im privaten Umfeld, in dem einzelne Personen individuelle Schwerpunkte setzen.

Einem Mitarbeiter oder auch einem Bewohner soll, nach einem Aspekt der vorliegenden Erfindung, eine Hilfestellung gegeben werden, um solche, überwiegend auf den Aufenthalt und die Arbeitsumgebung in einem Gebäude bezogene Tätigkeiten zuverlässig und sicher auszuführen, also auch dann auszuführen, wenn durch ein Ereignis oder eine Ereigniserwartung eine Ablenkung der üblichen Aufmerksamkeit vorliegt. Nach einem weiteren Aspekt soll die Sicherung von Gebäuden und Anlagen, insbesondere von in einem Zusammenhang mit einer gewerblichen Nutzung vorhandenen Räumlichkeiten, die in vielen Fällen zu einem Tages- oder Nachtzeitpunkt, z. B. abhängig von einem Arbeitszeitrhythmus, völlig verlassen werden, verbessert werden.

### Erfindungsbeschreibung

Die erfindungsgemäße Aufgabe wird durch eine Vorrichtung zur Gebäudeüberwachung nach Anspruch 1 gelöst, ein geeignetes Verfahren zur Überwachung eines Gebäudes lässt sich Anspruch 20 entnehmen. Vorteilhafte Weiterbildungen lassen sich den abhängigen Ansprüchen entnehmen.

In privat genutzten Wohngebäuden, genauso auch in Geschäftsräumen, z. B. in Bürogebäuden, Verwaltungsgebäuden, Laboratorien oder Fabrikhallen, werden von Personen, die sich in den jeweiligen Räumlichkeiten aufhalten, Änderungen an einem Gebäudezustand durchgeführt. Eingeschaltetes Licht, geöffnete Fenster, eingeschaltete elektrische und elektronische Geräte, Heizungsregelstellungen etc. können als Zustand innerhalb oder an einem Gebäude bezeichnet werden.

Unter einem Blickwinkel kann auch gesagt werden, die Zustände können Betriebszustände sein, die an Objekten, wie Installationen, in oder an einem jeweiligen Gebäude vorliegen. Ein Betriebszustand ist insbesondere ein während eines Gebäudebetriebs einnehmbarer Zustand. Anders gesagt, es liegt eine Zuordnung zwischen dem Objekt des Betriebszustands und einem Gebäudekomplex oder zumindest einem Gebäudeteil vor. In vielen Fällen sind die Betriebszustände den Gebäudeinnenbereichen zugeordnet. Ein Betriebszustand kann aber auch z. B. eine Außenbeleuchtung betreffen oder z. B. einen Anbau, wie eine Garage oder ein Schuppen, sowie z. B. eine Gasversorgung oder einen Notstromgenerator für ein Gebäude. Betriebszustände können einen Einfluss auf Umweltparameter in einem Gebäuderaum haben. Es können auch ganze Gebäudeteile, die einen oder mehrere Räume umfassen, von einem Betriebszustand betroffen sein. Eine Vorrichtung zur Überwachung kontrolliert mindestens einen Raum eines Gebäudes, vorzugsweise mindestens ein ganzes Gebäude. Die Stromversorgung oder Heizung von einem Gebäude oder von einem Gebäudekomplex, wie Geschäftsräume, die sich in mehreren Häusern befinden, kann als ein Zustand zentral, z. B. von einer Gebäudesteuerung aus, einstellbar sein. Die Vorrichtung zur Überwachung kann mit der Gebäudesteuerung zusammenarbeiten. Wenn eine Gebäudesteuerung vorgesehen ist, so hat diese Steuerung oft nur sehr begrenzte Funktionalitäten, wie eine Thermostatfunktion für eine Gebäudeheizung, die mithilfe geeigneter Anschlussmodule eingebunden werden können. Bereits in einem Gebäude vorgesehene Funktionalitäten zur Überwachung sind durch eine erfindungsgemäße Vorrichtung zur Überwachung erweiterbar. Eine Vorrichtung zur Überwachung kann mit einem Gebäudesicherheitssystem verbunden sein. Gebäudesicherheitssysteme werden oft nachträglich in Altbauten eingebaut, um neuesten Sicherheitsanforderungen zu genügen. Anders gesagt, ein Gebäudesicherheitssystem und eine Vorrichtung zur Überwachung mindestens einer Komponente, wie eine Detektionseinrichtung, können eine Datenübertragungsverbindung oder eine Datenanalyseeinrichtung gemeinsam nutzen.

Ein Ausführungsbeispiel für ein Gebäudesicherheitssystem ist ein Notlichtsystem. Notlichtsysteme werden vorteilhaft von einer Zentralbatterieanlage aus gesteuert. Das Notlichtsystem, insbesondere die Zentralbatterieanlage, umfasst vorteilhafterweise eine Datenanalyseeinrichtung, in der elektronisch Daten von den Notlichtleuchten zugeordneten Detektionseinrichtungen, wie eine raumbezogene Temperatursensorik, so zusammengeführt werden können, dass eine Vorrichtung zur Überwachung auf die Daten zugreifen kann.

Eine Person, die sich in einem Gebäude aufhält, richtet sich - üblicherweise - ihre Umgebung möglichst angenehm ein. Das Arbeitsumfeld bzw. das Arbeitsklima ist z. B. durch geöffnete Fenster, eingeschaltetes Licht oder Klimatisierung der Räume während der Arbeitszeit beeinflussbar. Es werden oft auch automatisierte Einrichtungen wie Türschließer oder Zeitschaltuhren außer Funktion gesetzt. Günstig ist es, wenn Betriebszustände, die unter Aufsicht einer Person geschaffen worden sind, durch Einwirkung der Person bei einer erkannten oder in Angesicht einer drohenden Gefahr, oft ohne einen schädlichen Zeitverlust, durch die Person sicherbar sind. Ein Tagesrhythmus einer Person kann aber auch verlangen, dass Tätigkeiten außerhalb des Gebäudes oder in anderen Gebäuden zu verrichten sind. Ein Betreten und Verlassen eines umgrenzten Raums, z. B. durch mindestens eine Person, insbesondere wenn es mehrmals täglich oder sogar durch ein und dieselbe Person erfolgt, wird auch als frequentieren bezeichnet. Wenn sich die Person von dem Gebäude oder von einem Zimmer, einem Flur oder einer Halle des Gebäudes entfernt, steht der jeweilige Raum oder Bereich nicht mehr unter Aufsicht durch die Person. Elektrische oder elektronische Geräte in dem Raum können überhitzen. Ungesicherte Fenster und Türen können durch einen plötzlichen Luftzug zerschlagen werden. Das Außenklima des Gebäudes sowie unbefugte Personen oder Tiere können möglicherweise ungehindert eindringen. Vorhandene Regel- und Schutzsysteme können derartigen Einflüssen, wenn überhaupt, nur zur Schadensbegrenzung oder durch einen Energieeinsatz zusätzlich zu einem regulären Energieverbrauch entgegenwirken.

Häufig übernehmen im allgemeinen Lebensalltag bestimmte Personen eine besondere Verantwortung. Beispielsweise trägt ein Hauseigentümer die Verantwortung für sein Haus, ein Laborleiter die Verantwortung für ein gesamtes Labor oder ein Büroleiter die Verantwortung für eines oder mehrere Büros. Auch ein angestellter Mitarbeiter hat dafür Sorge zu tragen, dass sein Arbeitsraum oder Büro in einem ordnungsgemäßen Zustand ist, wenn er den Raum, z. B. bis zum nächsten Arbeitstag, verlässt. Durch einen Zeitpunkt des Verlassens wird gleichzeitig ein Zeitpunkt festgelegt, an dem eine Erledigung von mindestens einer durch vorherige Personenanwesenheiten bedingte Aufgabe der Person abzufragen ist. Ein für die Überwachung des Gebäudes besonders günstiger Zeitpunkt ist die Entlassung eines Mitarbeiters in den Feierabend. Die Sicherheit, der Energiebedarf und die Umgebungsparameter an dem Arbeitsplatz des Mitarbeiters können durch den Betriebszustand von Objekten, die sich unter der Obhut des Mitarbeiters befanden, verschlechtert werden. Ein möglichst sicherer und energiebedarfsgünstiger Zustand für eines oder für mehrere Objekte ist als ein Sollzustand des jeweiligen Objekts für die Zeit nach dem Verlassen, z. B. des Gebäudes, festlegbar.

Die Vorrichtung zur Überwachung eines Gebäudes umfasst in mindestens einem Gebäudebereich eine erste Detektionseinrichtung. Die erste Detektionseinrichtung kann eine Personendetektionseinrichtung sein. Die erste Detektionseinrichtung kann mindestens ein Erkennungszeichen, wie eine Markierung, erfassen, das einer Person eindeutig zugeordnet ist. Es ist möglich, mit Hilfe der Detektionseinrichtung eine Person von anderen Personen zu unterscheiden. Die Unterscheidung erfolgt anhand von mindestens einem detektierbaren Erkennungszeichen, vorzugsweise einem ersten und einem zweiten Erkennungszeichen, wobei mindestens eines der Erkennungszeichen, z. B. das erste oder das zweite Erkennungszeichen, nur einer einzigen Person, insbesondere einer Person aus einem vorab festgelegten Personenkreis, unverwechselbar zuordenbar ist. Geeignete Erkennungszeichen können tragbare elektronische Geräte, Zeitstempelkarten, RFIDs, Kreditkarten, Uhren oder auch biometrische Daten sein.

Die Vorrichtung zur Überwachung eines Gebäudes umfasst mindestens eine zweite Detektionseinrichtung. Die zweite Detektionseinrichtung kann vorzugsweise einen ersten Zustand eines Objekts von einem zweiten Zustand des Objekts unterscheiden. Ein Zustand kann durch eine oder mehrere räumliche Koordinaten, wie die Angabe eines Orts oder die Abfrage eines Abstands, festgelegt sein. Der Zustand ist durch die Detektionseinrichtung erhebbar bzw. messbar bzw. ermittelbar. Der Zustand kann ein Betriebszustand sein. Ein Betriebszustand kann unter anderem eine Funktionalität, die dem Objekt zu eigen ist, betreffen. Es ist auch möglich, dass ein Objekt einen ersten Betriebszustand und mindestens einen zweiten Betriebszustand aufweist, wobei insbesondere einer der Betriebszustände, z. B. der erste, vorteilhafter ist als der zweite oder als die anderen Betriebszustände. In einem vorteilhaften Betriebszustand ist keine Person in der Nähe des Objekts erforderlich; das Objekt ist, anders gesagt, gesichert. Mindestens ein Objekt ist dem zu überwachenden Gebäude zugeordnet. Ein Gebäude kann mehrere zu bewachende Objekte umfassen. Der Zustand, insbesondere der Betriebszustand, eines Objekts ist vorzugsweise messbar. Ein räumlicher Zustand kann durch Bildauswertung von Aufnahmen, z. B. von einer Raumüberwachungskamera, ermittelbar bzw. auswertbar sein.

Eine Ausführungsform einer zweiten Detektionseinrichtung kann eine Messeinrichtung sein. Eine Messeinrichtung überwacht mindestens einen Messpunkt anhand einer Messgröße. Es gibt Zustände, wie ein Wärmeverlustzustand, die durch die zweite Detektionseinrichtung mit einer Zustandswahrscheinlichkeit, also z. B. mit einem Wahrscheinlichkeitswert, der größer als 0,5 ist, von wenigstens einem zweiten Zustand unterscheidbar sind. Eine Wahrscheinlichkeitsbestimmung für das Vorliegen eines Zustands ist z. B. in den Fällen vorteilhaft, in denen sich der Zustand des Objekts auf einen Zeitverlauf der erfassten Messgröße auswirkt, wie eine allmähliche Veränderung eines Zahlenwerts der Messgröße in Folge einer Zustandsänderung.

Eine Komponente der Vorrichtung ist eine Datenanalyseeinrichtung. Die Datenanalyseeinrichtung ist dafür gestaltet, mit mindestens einer ersten Detektionseinrichtung zusammenzuarbeiten. Die Datenanalyseeinrichtung ist auch dafür gestaltet, mit mindestens einer zweiten Detektionseinrichtung zusammenzuarbeiten. Die Datenanalyseeinrichtung kann Daten aus der ersten Detektionseinrichtung und Daten aus der zweiten Detektionseinrichtung aufbereiten bzw. verarbeiten. Vorzugsweise ist eine Datenvalidität durch eine Plausibilitätsüberprüfung absicherbar oder, z. B. bei einer Fehlerwahrscheinlichkeit, eine Wiederholung einer Abfrage vornehmbar. Vorliegende Abfrageergebnisse sind vorzugsweise nach einem Aspekt durch eine elektronische Datenanalyse überprüfbar.

Zur informationstechnischen Überbrückung möglicher Beabstandungen zwischen den Detektionseinrichtungen und der Datenanalyseeinrichtung sind Datenübertragungsverbindungen vorgesehen. Eine erste Datenübertragungsverbindung dient der Übermittlung von, insbesondere elektronischen, Daten von der ersten Detektionseinrichtung zur Datenanalyseeinrichtung. Die erste Datenübertragungsverbindung ist vorzugsweise auch dafür verwendbar, Daten von der Datenanalyseeinrichtung zur Detektionseinrichtung zu übertragen. Die erste Datenübertragungsverbindung kann z. B. als eine Funkdatenübertragungsverbindung, ausgehend von der ersten Detektionseinrichtung einrichtbar sein. Die Datenanalyseeinrichtung kann mit mindestens einer der zweiten Detektionseinrichtungen in Kommunikation treten. Eine zweite Datenübertragungsverbindung ist durch die Datenanalyseeinrichtung zur zweiten Detektionseinrichtung erstellbar. Eine Datenübertragungsverbindung ist für einen Informationsfluss z. B. über mindestens eine Standleitung verknüpfbar.

Für die Datenanalyseeinrichtung ist eine erste Datenspeichereinheit vorgesehen. In der Datenspeichereinheit sind Daten, z. B. elektronisch, optisch oder magnetisch, abspeicherbar. Die Datenanalyseeinrichtung umfasst eine Sendeeinrichtung. Die Sendeeinrichtung ist an die Datenanalyseeinrichtung angeschlossen. Die Datenanalyseeinrichtung ist zwischen der Datenspeichereinheit und der Sendeeinrichtung so angeordnet, dass eine Datenkommunikation möglich ist. Die Sendeeinrichtung ist nach einem Aspekt mit mindestens einem elektronischen Schaltkreis ausgestattet, der zur Durchführung einer Signalübertragung an eine Empfangsstation geeignet ist. Als Empfangsstation ist insbesondere ein mobiles Empfangsgerät vorteilhaft, das durch eine Person während der Arbeitszeit getragen werden kann. Eine für eine einzelne Person eindeutige Adressierung der Empfangsstation ist vorteilhafterweise in der Vorrichtung hinterlegt. Die Adressierung kann in einem Protokoll verpackt in einem Netzwerk übertragen werden. Vorzugsweise befindet sich die Person zeitlich ununterbrochen in einer Reichweite der Empfangsstation, wie an einem Computerarbeitsplatz. Ein Computer, wie eine Datenanalyseeinrichtung, kann für das Senden und Empfangen von Informationen ausgestattet sein. Der Computer kann an ein elektronisches Netzwerk, wie das Internet, angeschlossen sein. In einer günstigen Ausgestaltung können durch eine Empfangsstation Wahrnehmungssinne einer Person, z. B über mindestens ein installiertes Empfangsprogramm, das ein Signalausgabemodul der Empfangsstation ansteuert, angesprochen werden.

Die Datenspeichereinheit dient dazu, eine Adressenzuordnung vorzuhalten. Eine Möglichkeit der Zuordnung besteht in der nachfolgenden Zuordnungsvariante. Die Datenspeichereinheit enthält in einer geordneten Datenstruktur die Adressen von mindestens einer Person, vorzugsweise von mindestens zwei Personen, wie die IP-Adressen (Internet-Protokoll-Adressen) von Empfangsstationen der jeweiligen Person. Die Datenspeichereinheit enthält außerdem die Adresse von mindestens einem Objekt. Das Objekt ist in der Datenspeichereinheit so vermerkt, dass eine Zuordnung zu mindestens einer Person vornehmbar ist. Die Adressenzuordnung ist in die Datenspeichereinheit einschreibbar, wobei das Einschreiben z. B. über eine Eingabeeinheit oder über eine Datenübertragungsverbindung, wie eine dritte Datenübertragungsverbindung, erfolgen kann.

Mit anderen Worten, in diesem Ausführungsbeispiel umfasst die Datenanalyseeinrichtung einen Zuordnungs-Algorithmus. Durch die Datenanalyseeinrichtung wird erkannt, ob eine identifizierte Person einem Objekt zugeordnet ist. Der Zuordnungs-Algorithmus ist derart ausgestattet, dass der Zuordnungs-Algorithmus die Erstellung einer dritten Datenübertragungsverbindung ermöglichen kann. Die dritte Datenübertragungsverbindung ist von der Sendeeinrichtung, die zu der Vorrichtung gehört, zu einer persönlichen Empfangsstation ausbildbar. Die persönliche Empfangsstation ist durch den Zuordnungs-Algorithmus auswählbar. Die dritte Datenübertragungsverbindung ist vorzugsweise eine personalisierte Verbindung. Anders gesagt, kann nur eine vorbestimmte Person Daten aus der dritten Datenübertragungsverbindung aufnehmen. Besonders günstig ist eine abhörsichere Datenübertragungsverbindung. Auslöser für die Erstellung einer dritten Datenübertragungsverbindung ist ein Signal, das von der ersten Detektionseinrichtung ausgeht. Dem Signal liegt eine Aktivierung der ersten Detektionseinrichtung zugrunde. Das Signal ist insbesondere ein personenbezogenes Signal, das dadurch ausgelöst wird, dass eine Person an einem vorbestimmten Ort eine vorbestimmte Aktion ausführt. Die Erstellung der dritten Datenübertragungsverbindung setzt eine Abfrageantwort der zweiten Detektionseinrichtung voraus. Die Abfrageantwort ist durch die Datenanalyseeinrichtung auswertbar. Die Abfrage der zweiten Detektionseinrichtung erfolgt aufgrund einer in der Datenspeichereinheit abgelegten Adresse des Objekts. Unter Einbeziehung der Adressenzuordnung wird die Abfrageantwort ausgewertet. Aufgrund der Auswertung der Abfrageantwort kann die Datenanalyseeinrichtung anhand vorab festgelegter und insbesondere abgespeicherter Kriterien entscheiden, ob eine Datenübertragung zu einer bestimmten Person zu erfolgen hat. Im Zuge einer Erstellung einer dritten Datenübertragungsverbindung zu der Person ist die Person zur Ausführung einer Aktion aufforderbar. Die auszuführende Aktion betrifft vorzugsweise eine Zustandsänderung eines Objekts.

Die Überwachung eines Gebäudes lässt sich vorteilhafterweise verfahrensartig gestalten.

Die Überwachung kann mithilfe eines Überwachungsverfahrens sichergestellt werden. Das Verfahren basiert unter anderem auf einer ersten Detektionseinrichtung. Die Detektionseinrichtung ist dafür ausgestattet, eine Person erkennen zu können. Die Person kann sich in einem Bereich des Gebäudes befinden. Besonders vorteilhaft ist es, wenn die Detektionseinrichtung in einem Ausgangsbereich angeordnet ist, sodass Personen, die sich von einem Gebäude entfernen wollen, erfasst werden können. Es ist auch möglich, eine erste Detektionseinrichtung in einem Eingangsbereich vorzusehen, durch den Personen in einen zu überwachenden Raum gelangen können. Für die Überwachung kann die Detektionseinrichtung in einem Durchgangsbereich für Personen angeordnet sein, der sich zumindest in einer Nachbarschaft des zu überwachenden Gebäudes oder in einem Gebäudeteil des zu überwachenden Gebäudes befindet. Besonders zuverlässig können Personen erfasst werden, wenn sowohl in einem Eingangsbereich als auch in einem Ausgangsbereich eines Gebäudes eine Detektionseinrichtung zur Personenerkennung vorgesehen ist.

Ein Ausführungsbeispiel, bei dem die Detektionseinrichtung, insbesondere eine erste Detektionseinrichtung, an einem Notausgang eines Gebäudes vorgesehen ist, ermöglicht eine vollständige Überwachung im Fall einer fluchtartigen Gebäuderäumung. Damit ist es möglich, bei der Überwachung des Gebäudes auch in einem Notfall eine Kontrolle über die noch in dem Gebäude befindlichen und möglicherweise eingeschlossenen oder gefährdeten Personen zu haben. Es können Objekte sowie zu überwachende Einheiten, die besondere Gefährdungspotentiale in dem Gebäude darstellen, identifiziert werden.

In einer günstigen Ausgestaltung ist die erste Detektionseinrichtung an eine Recheneinheit angeschlossen. Die Recheneinheit ist für die Ausführung von Programmen vorgesehen. Insbesondere auf der Recheneinheit oder in der Detektionseinrichtung ist ein Personendatenauswertemodul ausführbar. Anders gesagt, kann die Detektionseinrichtung einen Rechenprozessor umfassen. Das Personendatenauswertemodul dient der Ausführung von Programmschritten, die anhand von den durch die erste Detektionseinrichtung ermittelten Daten eine Identifizierung von einer Person erstellen. Die Identifizierung gilt der Individualisierbarmachung einer Person z. B. aus einem Mitarbeiterstab. Es kann auch gesagt werden, dass durch die Identifizierung einer Person diese Person einem Programm der Recheneinheit, wie dem Personendatenauswertemodul, bekannt wird.

Vorteilhaft ist es auch, wenn die Recheneinheit mit einem Sender verbunden ist. Der Sender ist eine Komponente einer Sendeeinrichtung. Es kann auch gesagt werden, dass ein Sendemodul eine Sendeeinrichtung umfasst. Der Sender dient der Übertragung von Daten an ein Empfangsgerät. Der Sender und das Empfangsgerät verwenden somit vorzugsweise eine übereinstimmende Datenstruktur.

Ein mit der Recheneinheit verbundener Datenspeicher für elektronisch bereitgestellte Daten ist z. B. als USB - Massenspeicher (die Abkürzung USB steht für ein "Universal Serial Bus") oder als eine Festplatte ausgebildet. In dem elektronischen Datenspeicher ist ein Adressdatenfeld auslesbar eingeschrieben. In dem Adressdatenfeld sind Personendaten enthalten. Die Personendaten umfassen z. B. Telefonnummern, also Informationen über Personen, die eine Übermittlung von Nachrichten an mindestens eine, vorzugsweise an mehreren Personen ermöglichen. Die Nachrichtenübermittlung kann z. B. durch elektronische Leitung oder per Funk erfolgen. In dem Adressdatenfeld ist außerdem mindestens eine zu überwachende Einheit mindestens einer Person zugeordnet. Eine zu überwachende Einheit kann z. B. eine Tür, ein Fenster oder ein Elektrogerät sein. Die zu überwachende Einheit umfasst vorzugsweise ein Objekt, von dem eine Information über die zu überwachende Einheit bezogen werden kann.

Anhand des Adressdatenfelds ist eine Adressdatenzuordnung bereitstellbar. Die Adressdaten können in dem Adressdatenfeld zusammen mit einer Datenzuordnung abgespeichert sein, die auf Objekte hinweist. Die zu überwachenden Objekte können nach einzelnen Arbeitsplätzen aufschlüsselt abgespeichert sein. Die Adressdatenzuordnung kann auf eine vorhandene Datenbank, wie eine Adressdatenbank, zugreifen.

In einer günstigen Datenstruktur ist mit dem Adressdatenfeld außerdem eine Sollzustandsinformation erhältlich. Die Sollzustandsinformation betrifft einen Zustand, in dem die zu überwachende Einheit sich vorzugsweise befinden soll. Bei der Sollzustandsinformation kann es sich auch um eine Messgröße handeln. Bei einer Bereitstellung einer formatierten Sollzustandsinformation in einem von einer zweiten Detektionseinrichtung verwendeten Datenformat kann ein Datenvergleich besonders rechenzeiteffizient ausgeführt werden. Einzelne Datengruppen können physisch in unterschiedlichen Dateien vorliegen, vorausgesetzt, die Recheneinheit verfügt über eine Zugriffsprogramm, das den Zugriff auf die einzelnen Daten ermöglicht. Mit anderen Worten, mit dem Ausdruck Adressdatenfeld verbindet sich unter anderem gedanklich das Konstrukt, dass die Recheneinheit durch eine Programmierung, z. B. im Verbund mit der Datenanalyseeinrichtung, dazu in der Lage ist, einen Zusammenhang der Daten, die personenbezogen sind, und der Daten, die auf die zu überwachende Einheit bezogen sind, zu erkennen. Gemäß einer vorgegebenen Überwachungsprogrammstruktur sind die Daten für einen Programmablauf zu nutzen.

In einem geeigneten Verfahren, mit dem ein Gebäude oder ein Gebäudeteil überwacht werden kann, werden von der Recheneinheit für die von dem Personendatenauswertemodul erkannte Person die der Person zugeordneten Personendaten abgefragt. Die Abfrage kann dadurch erfolgen, dass die Recheneinheit die Personendaten der bestimmten Person aus dem elektronischen Datenspeicher lädt. Zusammen mit den Personendaten erhält die Recheneinheit alle gespeicherten Daten von der zu überwachenden Einheit oder von mehreren zu überwachenden Einheiten, die jeweils der Person zugeordnet sind. Unter Berücksichtigung eines besonders interessanten, insbesondere programmiertechnischen Aspekts, insbesondere in Bezug auf Zuständigkeiten, kann ein Objekt, das der Überwachung unterliegt, auch als eine zu überwachende Einheit bezeichnet werden.

Die Recheneinheit sollte so gestaltet sein, dass sie die Fähigkeiten besitzt, in Verbindung mit mindestens einer zweiten Detektionseinrichtung treten zu können. Liegt die Verbindung zwischen der Recheneinheit und der zweiten Detektionseinrichtung vor, wird mindestens ein in dem Betrieb aktuell eingenommener Zustand, der auch als Betriebszustand bezeichnet wird, für eine zu überwachende Einheit ermittelt. Die zu überwachende Einheit kann ein Objekt sein, dessen Adresse in dem elektronischen Datenspeicher, insbesondere dem Adressdatenfeld in einen Zusammenhang mit der Person gesetzt ist. Die zweite Detektionseinrichtung kann auch dazu ausgestattet sein, mehrere Betriebszustände einer zu überwachenden Einheit für die Recheneinheit zu ermitteln. Es ist auch möglich, dass die zweite Detektionseinrichtung z. B. eine raumbezogene Detektionseinrichtung ist, die in einem Gebäudebereich eine Mehrzahl von zu überwachenden Einheiten kontrolliert. Die Überwachungsstruktur der zu überwachenden Einheiten und der Detektionseinrichtungen, insbesondere der zweiten Detektionseinrichtung, ist in einer Ausgestaltung in dem Adressdatenfeld umgesetzt. Anders gesagt, ist ein Adressdatenfeld zur Erlangung von Konfigurationsinformationen von zweiten Detektionseinrichtungen und von zu überwachenden Einheiten auswertbar.

Die Recheneinheit vergleicht den durch die zweite Detektionseinrichtung erhobenen Betriebszustand einer zu überwachenden Einheit anhand einer Zustandsinformation mit der aus dem elektronischen Datenspeicher bezogenen Sollzustandsinformation der zu überwachenden Einheit. Vorzugsweise ist für jede zu überwachende Einheit mindestens eine Sollzustandsinformation, insbesondere aus dem elektronischen Datenspeicher oder aus einem Empfangsgerät, abrufbar. Unterscheidet sich der Betriebszustand von der Sollzustandsinformation oder liegt möglicherweise keine verwertbare Sollzustandsinformation vor oder lässt sich ein Betriebszustand nicht ermitteln, so erkennt die Recheneinheit einen abweichenden Betriebszustand. Die Recheneinheit kann, insbesondere unter Heranziehung vorab programmtechnisch festgelegter Vergleichsroutinen, die Einleitung weiterer Maßnahmen veranlassen. Eine von der Recheneinheit bei einem abweichenden Betriebszustand einzuleitende Maßnahme ist die Erstellung eines Alarmzustandssignals. Das Alarmzustandssignal umfasst insbesondere eine Personenadresse. Die Personenadresse ist dem Adressdatenfeld entnehmbar. Mit Hilfe der Personenadressen, wie eine Telefonnummer, verschickt der Sender eine Benachrichtigung an mindestens eine Person. Eine der Personen ist die Person, die über die Personendaten der zu überwachenden Einheit zugeordnet ist. Die Benachrichtigung wird an mindestens ein der Personen zugeordnetes Empfangsgerät gesendet. Es können aber auch mehrere Benachrichtigungen gesendet werden, z. B. wenn in dem Adressdatenfeld eine E-Mail-Adresse und eine Mobil-Telefonnummer ein und derselben Person zugeordnet sind.

Auf einen konkreten Zeitpunkt bezogen ist feststellbar, ob sicherheitsrelevante Einheiten in oder an einem Gebäude, die von einer bestimmten Person zu beaufsichtigen sind, sich in einem gesicherten Zustand befinden. Es ist nicht erforderlich, den kompletten Arbeitsablauf aller Personen zu überwachen, sodass eine Sphäre der persönlichen Freiheit am Arbeitsplatz gewahrt bleibt. Die Vorrichtung und das Verfahren zur Überwachung eines Gebäudes stellen somit eine für das Arbeitsklima verträgliche Form der Überwachung bereit, die auch dem Sicherungsbedürfnis eines Unternehmens genügt.

Nachfolgend werden vorteilhafte Ausgestaltungen und Weiterbildungen dargelegt, die für sich gesehen, sowohl einzeln aus auch in Kombination, ebenfalls erfinderische Aspekte offenbaren können.

Die Vorrichtung und das Verfahren können auch mit Objekten umgehen, von denen zumindest eines mehrere überwachbare Zustände einnehmbar kann. Bei mindestens einem oder bei zwei Zuständen handelt es sich vorzugsweise um einen Endzustand, der von einem Übergangszustand unterscheidbar ist. Ein Endzustand ist ein stabiler Zustand, dessen Änderung eine zielgerichtete Maßnahme erfordert. Der Zustand eines Objekts kann eine durch Betätigung durch eine Person einnehmbare Stellung des Objekts oder eine betätigbare Einstellung an dem Objekt sein. Es ist z. B. möglich, dass eine Konfiguration eines Objekts manuell eingestellt wird. Ein möglicher Zustand ist eine Schalterstellung an einem Objekt. Auch eine Schlossstellung des Objekts kann als ein Zustand bezeichnet werden. Ein Betriebszustand kann als ein funktionaler Aspekt eines Objektzustands gelten, der als eine Einheit mit dem Objekt zu überwachen ist. Der Zustand kann sich insbesondere auf einen Betrieb eines Gebäudes auswirken. Die Einnahme eines bestimmten Betriebszustands kann sich im weiteren zeitlichen Verlauf auf das Gebäude oder zumindest auf einen Innenraum des Gebäudes auswirken. Eine mögliche Auswirkung ist der Verlust von elektrischer oder thermischer Energie. Die elektrische Energie sowie die thermische Energie werden in dem Gebäude z. B. durch ein externes Stromleitungsnetz, z. B. durch eine Heizungsanlage oder z. B. durch eine Kraft-Wärme-Kälte-Kopplung bereitgestellt. Durch eine Überwachung von durch manuelle Betätigung einnehmbaren Stellungen lassen sich Gebäudezustände erfassen, die in einem üblichen Arbeitsablauf oder Betriebsablauf in der Regel keine besondere Beachtung finden, und die mitunter automatische, in einem Gebäude vorgesehene Regelungen ungünstig beeinflussen können.

Ein Zustand ist als eine Zustandsinformation kommunizierbar. Die Zustandsinformation lässt sich als eine Datenform übermitteln. Eine sehr einfache Datenform ist ein bi-modales Datum. Der Begriff "bi-modales Datum" lässt sich z. B. unter einem bestimmten Blickwinkel dahingehend ausdrücken, dass das Datum ausdrückt, ob ein Zustand vorliegt oder ob ein Zustand nicht vorliegt. Eine einfache Zustandsinformation, wie eine Sollzustandsinformation, ist eine binäre Information, ausdrückbar durch das Zahlenpaar "0,1", oder alternativ auch durch "1,0", die das Vorliegen eines bestimmten Zustands der zu überwachende Einheit kennzeichnen kann. Ein Modus, übermittelt durch die Zahl "0", gibt z. B. an, dass der bestimmte Zustand nicht vorliegt. Ein Modus, übermittelt durch die Zahl "1", gibt z. B. an, dass der bestimmte Zustand vorliegt. Ein über ein bi-modales Datum mitteilbarer Zustand kann eine geometrische oder funktionale Raumbegrenzung eines Gebäudes sein, die z. B. Innenbereiche des Gebäudes voneinander oder einen Innenbereich des Gebäudes gegenüber einem Außenbereich des Gebäudes abgrenzt. Die Raumbegrenzung kann durch eine Person über ein Bedienelement bewirkt oder aufgehoben werden. Ein Beispiel für eine Raumbegrenzung ist eine Luftübertragungsverbindung, wie eine verschließbare Fensteröffnung oder ein verschließbarer Lüftungsschacht. Ein Raum kann auch im Hinblick auf eine Stromübertragungsverbindung in den Raum oder aus dem Raum heraus begrenzt sein. Eine Stromübertragungsverbindung ist z. B. durch eine überwachbare Sicherung schaltbar. Eine weitere Raumbegrenzung kann eine Datenübertragungsverbindung betreffen. Ein bi-modales Datum kann Auskunft darüber geben, ob eine Datenübertragungsverbindung vorliegt oder nicht vorliegt. Durch Trennung der Datenübertragungsverbindung ist z. B. ein unerwünschter Zugriff auf zu sichernde oder geheime Daten, die in einem Schutzraum eines Gebäudes aufbewahrt werden, verhinderbar.

Ein Zustand bzw. ein Status, es kann auch gesagt werden, ein Status oder ein Modus eines zu überwachenden Objekts kann durch mindestens einen Zustandsaufnehmer erfasst werden. Mindestens ein Zustandsaufnehmer ist in einem Bereich eines Gebäudes vorgesehen. Ein Zustandsaufnehmer kann eine elektrische Kontaktstelle sein, über die eine Spannung oder ein Stromfluss übertragbar ist. Eine Lichtschranke oder ein Lichtvorhang eignen sich als Zustandsaufnehmer. Optische Schranken erfassen einen Zustand durch Ablenkung oder Abblockung von sich aus einer Lichtquelle ausbreitenden elektromagnetischen Wellen. Eine weitere Möglichkeit für einen Zustandsaufnehmer ist ein Thermostat. Funktionell lässt sich ein Thermostat auch nach einem Aspekt als ein Temperaturfühler ansehen. Ein Temperaturfühler misst z. B. eine Raumtemperatur in einem Gebäude. Ein Zustand ist vorzugsweise ein sensorisch ermittelbarer Zustand. In einem Sensor wird eine Zustandsgröße in ein elektronisches Signal gewandelt. In einer Ausgestaltung ist auch möglich, dass in Zusammenwirken mit dem Sensor eine Digitalisierung und Zurverfügungstellung eines elektronischen Signals stattfindet. Durch einen Zustandsaufnehmer, der insbesondere ortsnah bzw. vor Ort angesiedelt ist, lassen sich Zustände von Objekten besonders präzise und zuverlässig erfassen. Eine unmittelbare Einflussnahme zur Sicherung des entsprechenden Bereichs eines Gebäudes ist möglich.

Besonders flexibel lässt sich die Adressenzuordnung verwalten, insbesondere erweitern, und so dem Wohnumfeld oder dem Arbeitsumfeld anpassen, wenn ein Datenbanksystem vorgesehen ist. Adressdaten können zur Erstellung einer Zuordnung in das Datenbanksystem z. B. durch eine Tastatur eingebbar sein. Auf einer Benutzeroberfläche des Datenbanksystems sind Änderungen an der Adressenzuordnung schnell vornehmbar. Das Datenbanksystem kann zusätzlich zu der Adressenzuordnung auch eine Archivierungsfunktion umfassen. Beispielsweise kann ein von der Datenanalyseeinrichtung erkanntes Zuordnungsereignis in dem Datenbanksystem abspeicherbar sein. Eine besonders hohe Datensicherung kann dadurch erreicht werden, dass eine zweite Datenspeichereinheit vorgesehen ist. Die zweite Datenspeichereinheit kann eine mobile Speichereinheit, wie ein USB-Stick, sein. Anstelle eines USB-Sticks kann als Zielort der zweiten Datenspeichereinheit ein tragbares Rechnersystem bestimmt sein. Es ist z. B. möglich, dass die letzte Person, die ein Gebäude verlässt, die zweite Datenspeichereinheit zur Datensicherung mit sich nimmt. In einer alternativen Weiterbildung erhält die letzte Person eine summarische Übersicht über alle zuvor eingetretenen Ereignisse, die Gegenmaßnahmen erforderlich machten. Aus der zweiten Datenspeichereinheit ist vorzugsweise unter anderem die Adressenzuordnung auslesbar. Wenn das Datenbanksystem erkannte Zuordnungsereignisse auf die zweite Datenspeichereinheit geschrieben hat, so sind auch erkannte Zuordnungsereignisse auslesbar. Eine Sicherungskopie eines Datenbanksystems auf einer zweiten Datenspeichereinheit erleichtert es, einen möglicherweise erfolgten, unbefugten Zugriff auf das Datenbanksystem aufzuspüren. Das Datenbanksystem lässt sich so gesondert sichern.

Eine Vorrichtung zur Überwachung arbeitet besonders zuverlässig und damit sicher, wenn die Datenanalyseeinrichtung ein Zeiterfassungssystem umfasst. Durch eine Verbindung zu einem Zeiterfassungssystem kennt die Datenanalyseeinrichtung die aktuelle Zeit bzw. die lokale Zeit des Gesamtsystems. In der ersten Datenspeichereinheit kann mindestens eine Uhrzeit vermerkt sein. Vorzugsweise ist in der ersten Datenspeichereinrichtung mindestens ein Kalendertag gespeichert. Auf die gespeicherten kalendarischen Daten und Uhrzeiten kann der Zuordnungs-Algorithmus zugreifen. Der Zuordnungs-Algorithmus führt unter anderem eine Vergleichsoperation aus. Im Wege eines Vergleichs ist z. B. zu beobachten, ob eine von dem Zeiterfassungssystem bestimmte Zeit vor oder nach einer in der ersten Datenspeichereinheit abgespeicherten Zeit liegt. Bei einem aktuellen Tag, der als Wochentag präzise bestimmbar ist, oder/und bei einer aktuellen Tageszeit, kann der Zuordnungs-Algorithmus eine Übereinstimmung mit einer gespeicherten Uhrzeit und insbesondere mit einem gespeicherten Kalendertag, wie einem Wochentag oder einem Arbeitstag, feststellen. Eine erfolgte Zuordnung ist als Startsignal für die erste Detektionseinrichtung und damit für die Datenanalyseeinrichtung ausgebbar. Ein Stoppsignal lässt sich entsprechend zum Startsignal über eine erfolgte Zuordnung generieren. Damit ist ein erhöhtes Datenaufkommen außerhalb eines in der ersten Datenspeichereinheit gespeicherten, vorbestimmten Zeitfensters vermeidbar. Vorhandene Kapazitäten der Recheneinheit stehen für arbeitsbezogene Prozesse in einem Unternehmen nahezu uneingeschränkt zur Verfügung. Das gesamte Überwachungssystem läuft stabil und ist somit in einem sicheren Betriebszustand.

Die erste Detektionseinrichtung arbeitet besonders genau, wenn sie ein Anwesenheitskontrollsystem umfasst. Als ein Anwesenheitskontrollsystem ist z. B. eine Stechuhr verwendbar. Bei einem Arbeitsbeginn und bei einem Arbeitsende führt der Mitarbeiter eine persönliche Stechkarte in die Stechuhr zur Arbeitszeiterfassung ein. Ein Anwesenheitsende einer Person lässt sich auch durch ein System zur Erfassung biometrischer Daten wie z. B. Fingerabdrücke durch ein Fingerabdruckeinlesesystem, wie ein Scanner oder eine Tastatur, überwachen. Ein für eine schnelle und sichere Identifikation einer Person geeignetes Fingerabdruckeinlesesystem umfasst einen Fingerabdruckleser. Es ist auch möglich, ein graphologisches Erkennungssystem zu verwenden, in das eine Person ein persönliches Zeichen einschreibt. Ein weiteres, vorteilhaftes Anwesenheitskontrollsystem ist - generell - ein biometrisches Erfassungssystem. Durch eine Kameraerfassung einer Iris oder durch eine Kameraerfassung eines Gesichts können optische Merkmale einer Person zur Erkennung, anders gesagt, zur Identifikation der Person verwendet werden. Ein optisches Gesichtserkennungsmodul kann z. B. mehrere bekannte Proportionen in einem Gesicht ausmessen. Eine weitere Möglichkeit für ein Anwesenheitskontrollsystem, das sehr zuverlässig arbeitet, ist ein Lesegerät. Ein Lesegerät arbeitet insbesondere rechenzeiteffizient, weil ein Abgleich mit den durch die erste Detektionseinrichtung gemessenen Daten und den abgespeicherten Daten durch algorithmische Korrelationsbildung möglich ist. Das Lesegerät kann z. B. elektromagnetische Wellen, wie Radiowellen, aufzeichnen. Ein optisch strukturiertes Feld oder ein Transponder sind erfassbar. Das Lesegerät kann, anders gesagt, eine flächig dargebotene Information oder eine in Amplituden oder Frequenzmodulation dargebotene Information aufnehmen. Somit lässt sich für ein jeweiliges Anwendungsumfeld ein geeignetes oder bereits vorgesehenes bzw. vorhandenes Anwesenheitskontrollsystem eines Betriebes oder eines Gebäudes mit der ersten Detektionseinrichtung verbinden. Die sicheren und erprobten Komponenten anderer Systeme eines Betriebs lassen sich günstigerweise für ein Überwachungssystem nach vorliegender Erfindung ebenfalls nutzen.

Eine erste Detektionseinrichtung kann eine Ortsbestimmungseinrichtung umfassen. Die Verwendung einer Ortsbestimmungseinrichtung ist nach einem Aspekt besonders vorteilhaft, wenn die Anzahl der Ausgänge, die für einen Gebäudekomplex in die Überwachung einzubeziehen sind, ungefähr der Anzahl der Räume in dem Gebäudekomplex gleicht. Als Ortsbestimmungseinrichtung eignet sich z. B. ein Mobilfunksystem. Auch ein Transpondersystem kann zur Ortsbestimmung verwendet werden. Eine Ortsbestimmung ist durch Signalpegelmessungen möglich. Insbesondere bei Orten, die weit auseinander liegen, eignen sich auch Signallaufzeitmessungen. Die Laufzeit wird z. B. zwischen einem festgelegten Funksender und einem von einer Person getragenem Funketikett, das von dem Funksender ansprechbar ist, über ein rückgesendetes Signal bestimmt. Vorzugsweise werden in einem Unternehmen, je nach unternehmensintern bevorzugtem System, Mobilfunkgeräte oder Funketiketten an die Mitarbeiter ausgegeben, die ständig von den Mitarbeitern zu tragen sind, sodass eine eindeutige Personenzuordnung gegeben ist. Die zu dem Objekt nächstbefindliche Person ist mittels Ortsbestimmung von der Datenanalyseeinrichtung auswählbar. Damit lässt sich sicherstellen, dass die Person, die am nächsten dem vorzunehmenden Ereignis oder der vorzunehmenden Aktion ist, eingreifen kann. Eingriffe sind von Personen vorzunehmen, die am ehesten von einem Ereignis betroffen sind. Durch die Zuordnung nach Betroffenheit wird das Überwachungssystem zusätzlich sicherer.

Die erste Detektionseinrichtung kann zur Absicherung der Güte der Daten ein Fehlerkorrekturmodul aufweisen. Das Fehlerkorrekturmodul dient dazu, eine Fehlbestimmung einer Person durch die erste Detektionseinrichtung zu vermeiden. Es ist z. B. möglich, zwei oder mehrere Lesegeräte, die jeweils mit elektromagnetischen Wellen von unterschiedlicher Frequenz arbeiten, zu verwenden. Auf diese Weise kann der ersten Detektionseinrichtung eine Überschussinformation über eine Person zugeführt werden. Ein Redundanzprüfer stellt anhand einer Überschussinformation fest, ob eine Information zutreffend sein kann. Fehlerhafte Informationen erzeugen - mit einer geringeren Wahrscheinlichkeit und somit seltener - Eingriffsaktionen. Das Überwachungssystem ist zuverlässiger und sicherer.

Die Empfangsstation ist vorzugsweise eine transportable Empfangsstation. Eine Person, die die Empfangsstation mit sich führt, soll in ihrem Aktionsradius möglichst unbeeinträchtigt bleiben. Es eignen sich z. B. ein Laptop, ein Tablet-PC, ein Smartphone oder ein Personenrufempfänger als Empfangsstation, insbesondere wenn der Sendeempfang bis in dem Gebäude und in Gebäudenachbarschaft durch ein Mobilfunkstationsnetz abgedeckt ist. Die Verwendung eines Pagers ist vorteilhaft, um einem Mitarbeiter keine Mittel für eine arbeitsfremde Beschäftigung an die Hand zu geben. Das Überwachungssystem ist zwar präsent, es führt aber - von Haus aus - nicht zur Ablenkung der mit solchen Empfangsstationen ausgestatteten Personen. Auch eine so durchdachte Verwendung von Empfangsstationen kann zur Steigerung der Zuverlässigkeit und der Sicherheit beitragen.

In manchen Gebäuden sind Objekte vorgesehen, die über ein Fernbedienungsmodul betätigbar sind. Über ein Fernbedienungsmodul können z. B. Rollläden geschlossen oder Beleuchtungssysteme kontrolliert werden. Besonders zeiteffizient ist es, wenn das Fernbedienungsmodul von einer Empfangsstation aus zu betätigen ist. Von der Empfangsstation aus kann eine Person den Aufbau einer Datenübertragungsverbindung zur Datenanalyseeinrichtung veranlassen. Die Datenanalyseeinrichtung kommuniziert in weiterer Folge mit dem Fernbedienungsmodul. Die Datenanalyseeinrichtung kann durch übersendete Befehle an das Fernbedienungsmodul Änderungen an dem Objekt unmittelbar vornehmen. In einer Ausgestaltung ist es z. B. möglich, von der Empfangsstation aus durch eine Fernbedienung des Objekts einen ersten Betriebszustand durch einen zweiten Betriebszustand zu ersetzen. Der zweite Betriebszustand ist vorzugsweise ein Ruhezustand, in dem das Objekt sich selbst überlassen bleiben kann. Unter einem weiteren konzeptionellen Zugang kann der zweite Betriebszustand als ein gesicherter Zustand ausgestaltet sein, sodass von dem Objekt keine Gefährdung mehr ausgehen kann.

Als Datenübertragungsverbindung in einem Gebäudeumfeld eignet sich besonders eine Kurzstreckenfunkverbindung. Eine Kurzstreckenfunkverbindung kann z. B. in einem elektromagnetischen Frequenzband von 2,4000 GHz bis 2,4825 GHz arbeiten. Zur Verwendung eines anderen Frequenzbandes ist es auch möglich, eine Kurzstreckenfunkverbindung in einem Frequenzband von 5,150 GHz bis 5,725 GHz einzurichten. Eine in diesen Frequenzbändern verwendete Funkverbindung ist z. B. unter der Bezeichnung "Bluetooth" (auf Deutsch: "Blauzahn" bzw. "König Blauzahn") bekannt. Für Gebäudekomplexe ist in der Regel eine Reichweite von 100 m oder sogar eine Reichweite von nicht mehr als 50 m ausreichend. Durch eine Reichweitenbegrenzung können nebeneinander befindliche Gebäudekomplexe ungestört voneinander überwacht werden. Aufgrund eines im Vergleich zu einer Vollüberwachung geringen Datenaufkommens ist eine Datenübertragungsrate - in vielen Anwendungs- und Systemkonfigurationsfällen - von nicht mehr als 3 MBit/s ausreichend. Durch Verwendung von Bluetooth-Technologien lässt sich eine Vorrichtung zur Überwachung eines Gebäudes besonders kostengünstig, zugleich aber auch sicher und effizient aufbauen, wobei eine Vielzahl von zu überwachenden Objekten eingebunden werden können.

Vorzugsweise sind die Betriebszustände der diversen Geräte, Bauteile und Gebäudekomponenten, insbesondere der Gebäudeinstallationstechnik, durch ein Bluetooth-Messdatenerfassungssystem zu überwachen. Ein Bluetooth-Messdatenerfassungssystem umfasst mindestens eine Detektionseinrichtung, wie eine erste und/oder eine zweite Detektionseinrichtung. Ein Bluetooth-Messdatenerfassungssystem kann auch mit einer Datenanalyseeinrichtung, insbesondere mit einer Recheneinheit, verbunden sein, wodurch eine besonders fehlerarme Datenübertragung ermöglicht wird.

Eine Datenübertragungsverbindung kann mit Hilfe eines Infrarotlichtemitters und eines Infrarotlichtdetektors aufgebaut werden. Für die Datenübertragung eignet sich besonders gut sogenanntes Nah-Infrarotlicht, das einen Wellenlängenbereich von 850 nm bis 2.000 nm umfasst. In diesem Wellenlängenbereich senden natürliche Infrarotstrahler nur äußerst geringe, möglicherweise störende Intensitäten aus. Es ist auch möglich, eine oder mehrere Datenübertragungsverbindungen durch Verwendung von Mikrowellenemittern und Mikrowellendetektoren aufzubauen. Bei Verwendung mehrerer Datenübertragungsverbindungen können verschiedene Trägermedien für die Datenübertragung, wie Infrarotlicht, Mikrowellen oder elektrischer Strom, nebeneinander eingesetzt werden. Eine Datenkommunikation zu unterschiedlichen zu überwachenden Objekten in einem Raum ist damit interferenzfrei herstellbar. Das Überwachungssystem hat die Möglichkeit, die Datenübertragungsverbindung zu wählen, die in dem jeweiligen Fall die sicherste und die zuverlässigste ist. Es ist auch möglich, mehrere Datenübertragungsverbindungen unterschiedlicher Art zu einem Objekt aufzubauen, wenn die Sicherung des Objekts einer besonderen Sorgfalt bzw. Redundanz bedarf, z. B. weil störende Umwelteinflüsse vorliegen.

Mindestens eine Datenübertragungsverbindung kann eine durch mindestens ein Kennwort geschützte Datenübertragungsverbindung sein. Ein Kennwort ist vorzugsweise eine Kombination aus Buchstaben, Zahlen und Sonderzeichen, die nicht dem Sprachschatz entstammen. Durch einen Kennwortschutz kann sichergestellt werden, dass nur die Person, die über die Empfangsstation verfügt, auch tatsächlich die übertragenen Daten, insbesondere Standortdaten eines Objekts, in verwendbarer Qualität erhält. Ein Kennwort kann an dem Empfangsgerät eingebbar sein, damit Daten gelesen werden können. Ein Kennwort kann Schutz vor einem unberechtigten Zugriff auf Daten, die insbesondere ein Betriebsgeheimnis enthalten, bieten. Es ist möglich, Daten durch Bereitstellung eines Schlüssels auf einer Datenanalyseeinrichtung und auf der Empfangsstation unverständlich für eine Fremdabhörung der Datenübertragungsverbindung zu machen. Nach einem Aspekt kann ein Kennwort auch als ein Schlüssel bezeichnet werden. Eine Empfangsstation, durch die insbesondere eine Fernbedienungseinheit mittels einer Datenübertragung betätigt werden kann, ist mit einem Kennwort schützbar. Ungewollte Eingriffe und Veränderungen in das Überwachungssystem können unterbunden werden, das Überwachungssystem ist selbst abgesichert.

Ein Verfahren zur Überwachung eines Gebäudes ist für die einzubindenden Personen besonders nützlich, wenn das Empfangsgerät ein Sendemodul umfasst. Es ist auch vorteilhaft, wenn die Recheneinheit mit einem Rückmeldeempfänger für das Sendemodul des Empfangsgeräts verbunden ist. Die an dem Empfangsgerät befindliche Person, die durch die Recheneinheit informiert wurde, kann der Recheneinheit eine Rückmeldung geben. Das Empfangsgerät stellt den Empfang eines Signals, dass einen Alarmzustand enthält, für eine Person erkennbar dar. Die Person kann über das Sendemodul den Empfang des Signals bestätigen. Wenn die Person, z. B. aufgrund der Kenntnis des Gebäudes, weiß, dass ein Fehlalarm vorliegt, so kann ein Fehlalarmrückmeldesignal über das Sendemodul zum Rückmeldeempfänger geschickt werden. Das Fehlalarmsignal wird vorzugsweise abgespeichert, sodass nach einer Auswertung einer Signalkommunikation möglicherweise erforderliche Reparaturen veranlasst werden können. Das Überwachungssystem kann dank solcher Verfahrensschritte ein lernendes System sein, das, zumindest im Laufe der Zeit, Fehlalarme aussondern kann. Das Überwachungssystem steigert so seine Akzeptanz und damit die Sicherheit, insbesondere zur Erkennung der tatsächlich vorliegenden Zustände, zu denen Alarmierungen notwendig sind.

Die Möglichkeiten bei der Gebäudeüberwachung lassen sich noch weiter verbessern, indem die erste Detektionseinrichtung eine erste Ortsbestimmung von wenigstens einer Person durchführt. Die Ortsbestimmung kann durch eine Lateration oder eine Angulation erfolgen. Versuche des Erfinders haben gezeigt, dass ein für eine Ortsbestimmung bewährtes technisches Verfahren eine Trilateration oder eine Triangulation ist. Eine Ortsbestimmung von einer Person ist z. B. dann vorteilhaft, wenn in einem Notfall eine Person in dem Gebäude vermisst wird. Eine Ortsbestimmung ist auch von Vorteil, wenn nach einem Stellvertreter für eine erste Person zu suchen ist. Der Stellvertreter ist als eine zweite Person vorgesehen, um die Aufgaben der ersten Person, durch die eine Initialisierung über die erste Detektionseinrichtung erfolgt ist, zu übernehmen. Das ist z. B. in dem Fall hilfreich, in dem die erste Person, die von der ersten Detektionseinrichtung erfasst wurde, auf ein Signal, insbesondere ein Alarmzustandssignal, das von der Recheneinheit an das Empfangsgerät der ersten Person gesendet wurde, nicht reagiert.

Wenn die Überwachung eines Gebäudes zu einem Alarmzustandssignal führt, so kann eine Person besonders zeiteffizient zur Behebung des Alarmzustandssignals angeleitet werden, wenn das Alarmzustandssignal eine Bezeichnung der zu überwachenden Einheit enthält. Die Bezeichnung kann z. B. in dem Adressdatenfeld abgespeichert sein. Es ist auch möglich, eine Bezeichnung durch die zweite Detektionseinrichtung in einem Datenpaket einzufügen, das an die Recheneinheit übertragen wird. Die Bezeichnung kann mit weiteren Daten oder Datenpaketen, insbesondere mit Daten aus dem Adressdatenfeld, z. B. durch die Datenanalyseeinrichtung, die auf der Recheneinheit vorliegt, zu einem Alarmzustandssignal aufbereitet werden. Wenn das Alarmzustandssignal auch eine Standortsangabe der zu überwachenden Einheit auf dem Empfangsgerät zur Anzeige bringt, ist die Einheit besonders schnell auffindbar. Wiederholende und das Überwachungssystem belastende Alarmzustandssignale können nach kurzer Zeit gestoppt werden.

Die Recheneinheit kann für das Verfahren so eingerichtet sein, dass das Alarmzustandssignal in vorgebbaren Zeitintervallen gesendet wird. Es ist möglich, an dem Empfangsgerät einen Alarmzustand für einen vorgebbaren Zeitraum zu signalisieren. In einer Ausgestaltung ist es möglich, nach einer Pause, die über ein vorgebbaren Zeitintervall eingehalten wird, ein Alarmzustandssignal erneut, insbesondere wiederholt, an ein Empfangsgerät zu senden. Das Empfangsgerät weist eine Ausgabeeinheit auf. Die Ausgabeeinheit ist zur Ausgabe mindestens einer Pegeländerung eines Reizes ausgestattet. Das Empfangsgerät ist dafür ausgestattet, um auf die Sinne einer Person einzuwirken. Ein Alarm kann ein akustischer Alarm sein. Es ist auch möglich, einen Alarm optisch oder haptisch zur Anzeige zu bringen. Besonders auffällig sind Alarmsignale, die durch eine Pegeländerung nach Art einer Sirene oder eines Blinklichts ein Alarmzustandssignal ausgeben. Weil zu erwarten ist, dass eine angesprochene Person auf solche Signale zügig reagiert, sollte der Alarmzustand auch zugig abstellbar sein.

Die Überwachung kann noch sicherer zu einer gegebenenfalls erforderlichen Aktion einer Person führen, wenn das der ersten Person zugeordnete Empfangsgerät, das einen Sendemodul aufweist, zur Erstellung einer Rückfrageverbindung an den Rückmeldeempfänger der Recheneinheit verwendet wird. Aufgrund der Lebensrealität sind Situationen denkbar, in denen eine Person von einer zeitnahen Reaktion auf ein Alarmzustandssignal abgehalten ist. Über die Rückfrageverbindung ist eine Verhinderung der ersten Person anzeigbar. Die Recheneinheit kann darauf reagieren, dass die erste Person nicht verfügbar ist. Die Recheneinheit kann das Alarmzustandssignal an ein zweites Empfangsgerät einer zweiten Person leiten. Die zweite Person ist vorzugsweise über einen Stellvertretereintrag in einem Adressdatenfeld festgelegt. Es ist möglich, eine Liste mit einer Rangordnung von Stellvertretern in dem Adressdatenfeld vorzusehen, die von der Recheneinheit abgearbeitet werden kann. Die Recheneinheit kann mit Hilfe der ersten Detektionseinrichtung feststellen lassen, ob sich der Aufenthaltsort der zweiten Person in dem zu überwachenden Gebäude befindet. Es wird ein zweites Alarmzustandssignal an ein zweites Empfangsgerät gesendet, das der zweiten Person zugeordnet ist. Wenn das zweite Empfangsgerät ein zweites Sendemodul umfasst, so ist es möglich, dass die zweite Person ein Bestätigungssignal des Alarmzustandssignals an die Recheneinheit zurücksendet. Eine Beendigung des Alarmzustandssignals durch die Recheneinheit erfolgt vorzugsweise erst dann, wenn die zweite Person die Übernahme des Alarmzustandssignals an die Recheneinheit bestätigt. Damit kann die Recheneinheit eine zu überwachenden Einheit im Gebäude der zweiten Person zuordnen, die insbesondere dann, wenn die zweite Person das Gebäude verlässt, durch die Recheneinheit an die zu erledigende Aufgabe durch ein weiteres Alarmzustandssignal erinnert wird.

Das zweite Alarmzustandssignal enthält vorzugsweise eine Absenderkennung. Die Absenderkennung wird an dem zweiten Empfangsgerät ausgegeben. Das zweite Empfangsgerät ist so gestaltet, das es von der zweiten Person gelesen werden kann bzw. lesbar ist. Die zweite Person kann anhand der Absenderkennung die erste Person persönlich identifizieren. Die Ablehnung des zweiten Alarmzustandssignals durch die zweite Person erfolgt über eine zweite Rückfrageverbindung des zweiten Empfangsgeräts an die Recheneinheit. Durch Ablehnung eines zweiten Alarmzustandssignals kann die zweite Person sich einem Fehlverhalten der ersten Person entziehen. Zugleich ist der Recheneinheit bekannt, dass weder die erste, noch die zweite Person die Aufgabe erledigt hat.

Im Arbeitsalltag können sich auch längere Abwesenheiten einer Person von ihrem Arbeitsplatz ergeben. In einer Ausgestaltung des Überwachungssystems bzw. der darauf laufenden Software kann die Person im Besitz einer Empfangseinheit mit Sendemodul Verbindung zur Recheneinheit aufnehmen. Ist die Verbindung hergestellt, kann z. B. ein Abwesenheitsindikator in dem Adressdatenfeld gesetzt werden. Die Person wird dann z. B. bei einer Stellvertreterbenachrichtigung nicht mehr berücksichtigt. Wenn eine erste Person durch die Recheneinheit nicht erreichbar ist, so kann die Recheneinheit dann aus einer Untergruppe oder aus einer Gesamtheit der in dem Adressdatenfeld enthaltenden Personendaten von mehreren Personen eine weitere Person auswählen. Die Recheneinheit kann durch eine erste Detektionseinrichtung eine Personenanwesenheitskontrolle, insbesondere zur Überprüfung eines gesetzten Abwesenheitsindikators, durchführen lassen. Ist eine der Personen, die in dem Adressdatenfeld vorgesehen ist, auffindbar, so kann die Recheneinheit die Sendung eines weiteren Alarmzustandssignals an ein weiteres Empfangsgerät, das im Besitz der weiteren Person ist, veranlassen. Auf diese Weise lässt sich sicherstellen, dass in jedem Fall zunächst eine von Unternehmensseite als vertrauenswürdig eingestufte Person mit einer Zugangsberechtigung sich um die Behebung der Ursache für ein Alarmzustandssignal kümmert.

Für einen Fall, dass die Recheneinheit nach Initiierung durch eine erste Person keinen Stellvertreter über das Adressdatenfeld ermitteln kann, besteht eine Möglichkeit, in dem Adressdatenfeld einen Notrufindikator vorzusehen. Der Notrufindikator ist insbesondere bei einer zu überwachenden Einheit oder einem Objekten vorteilhaft, wenn ein besonders hohes Gefährdungspotential besteht, wie z. B. bei brennbaren oder giftigen Gasen. Ein Notrufindikator ist besonders sinnvoll, wenn die Behebung der Ursache für das Alarmzustandssignal eine besondere fachliche Qualifikation erfordert. Bei einem gesetzten Notrufindikator kann z. B. im Falle eines Alarmzustandssignals unmittelbar, ohne Benachrichtigung eines Mitarbeiters die Feuerwehr alarmiert werden. Die Recheneinheit kann auch auf den Notrufindikator als eine letzte Maßnahme kommen, wenn nach Zuwarten eines vorgegebenen Zeitintervalls keine Empfangsbestätigung für ein Alarmzustandssignal registriert wurde.

Durch eine Dokumentation möglichst aller gebildeten Alarmzustandssignale lässt sich ein Betriebsablauf, z. B. in einem Gebäude, auf mögliche, erhöhte Risiken hin analysieren, sodass geeignete Maßnahmen zur weiteren Minderung der Risiken ergriffen werden können. Eine Dokumentation des Alarmzustandssignals sollte insbesondere den Betriebszustand abspeichern, der dem Alarmzustandssignal zugrunde liegt. Mindestens ein Personendatum, durch das eine erste Person identifizierbar ist, sollte mit dem Alarmzustandssignal abgespeichert werden. Die Speicherung erfolgt vorzugsweise elektronisch in ein Datenbanksystem. Vorzugsweise werden außerdem Rückmeldesignalen aus Rückfrageverbindungen und gegebenenfalls Fernbedienungssignale abgespeichert, die über ein mit dem Empfangsgerät verbundenes Sendemodul der Recheneinheit zugeleitet wurden. Alarmzustandssignale können in der Datenbank während eines vorgebbaren Zeitintervalls abgespeichert und akkumuliert werden. Die akkumulierten Daten sind als ein kalendarisches Protokoll zur Dokumentation ausgebbar. Eine Datenauswertung kann eine Alarmhäufigkeit oder eine Fehlalarmhäufigkeit aufzeigen. Insbesondere kann durch Verwendung eines Datenbanksystems, in dem alle Alarmzustandssignale abgespeichert sind, auf einen zuverlässigen Betriebszustand der Vorrichtung zur Überwachung eines Gebäudes zurückgeschlossen werden.

Das zuvor beschriebene Überwachungssystem und das zuvor beschriebene Verfahren können wie folgt genutzt werden.

Wenn mithilfe oder aufgrund des Betriebs einer ersten Detektionseinrichtung ein Anzeichen des Verlassens, insbesondere der Arbeitsstätte, hervorgeht, kann die jeweilige Person oder der jeweilige Mitarbeiter durch korrigierenden Hinweis aufgefordert werden, die Geräte und Installationen an der Arbeitsstätte in die gewünschten (Betriebs-)zustände zu bringen. Ein gewünschter Betriebszustand ist z. B. ein geschlossenes Fenster, ein heruntergedrehter Heizungsthermostat, ein verschlossenes Rolltor etc.. Besonders vorteilhaft ist es, wenn das Verlassen nicht unmittelbar an der vorgesehenen Arbeitsstätte detektiert wird, sondern die Grenzen des Bewegungsraums einer Person mit Gebäudegrenzen oder Gebäudeteilen zusammenfallen. So kann z. B. überprüft werden, ob ein Mitarbeiter z. B. den Bereich "Produktion", z. B. das Bürogebäude oder z. B. das Lager verlassen hat. Aufgrund der Abfrage zu einem bestimmten Zeitpunkt, wie dem Ende der Arbeitszeit, muss nur eine vergleichsweise geringe Datenverarbeitungskapazität vorgehalten werden, im Gegensatz zu einem sogenannten Experten-System, das permanent versucht, die gesamte Arbeitssituation einer Person und insbesondere deren Arbeitsleistung zu erfassen. Die Vorrichtung zur Überwachung verwendet nur wenige personenbezogene, elektronisch erfasste Daten, wie Telefonnummern. Die Daten sind insbesondere auf einen vorab festgelegten und abgespeicherten Zuständigkeitsbereich oder Aufgabenbereich des Mitarbeiters beschränkbar.

Darüber hinaus trägt die Erfindung dazu bei, die Effizienz einer Gebäudenutzung zu erhöhen. Unnötige Energieverbräuche bzw. -umsetzungen können reduziert werden. Verlässt ein Mitarbeiter seinen Arbeitsbereich, können einzelne Geräte abgeschaltet oder verschlossen werden; auch können Fenster, die zum Lüften geöffnet wurden, wieder verschlossen werden. Computer, die nicht weiter verwendet werden, werden z. B. ausgeschaltet.

Die vorliegende Erfindung leistet einen Beitrag zur Energieeinsparung und der effizienten Nutzung von Energie, insbesondere in und von Gebäuden.

Die zuvor dargestellten Kombinationen und Ausführungsbeispiele lassen sich auch in zahlreichen weiteren Verbindungen und Kombinationen betrachten.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 eine installierte Vorrichtung zur Überwachung von Gebäuden,
Figur 2 eine schematische Konfiguration einer Vorrichtung zur Überwachung eine Gebäudes und
Figur 3 einen Ablaufplan für eine Ausführungsform eines Verfahrens zur Überwachung eines Gebäudes zeigt.

### Figurenbeschreibung

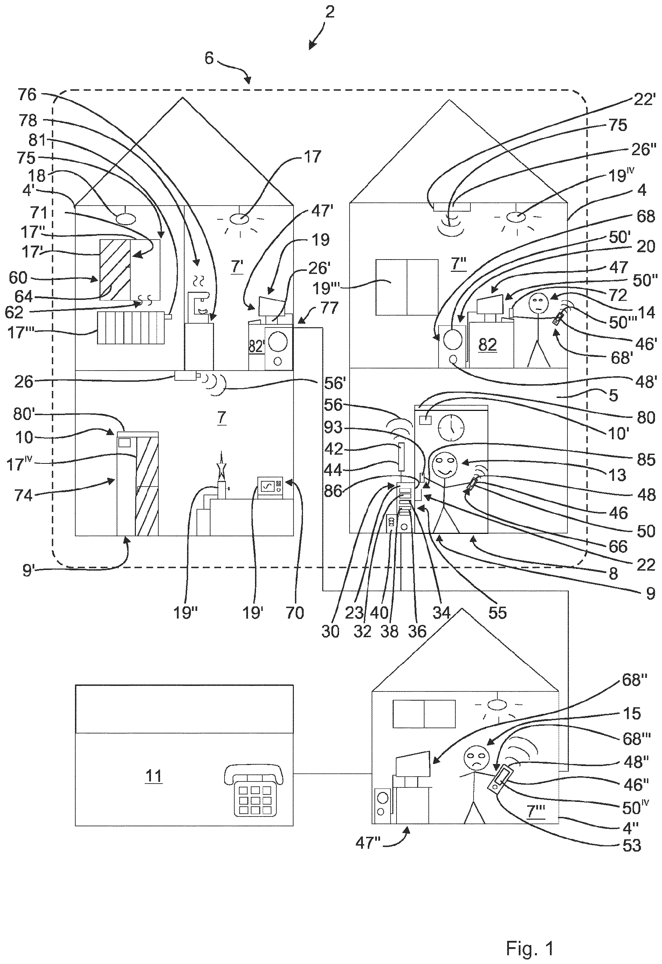

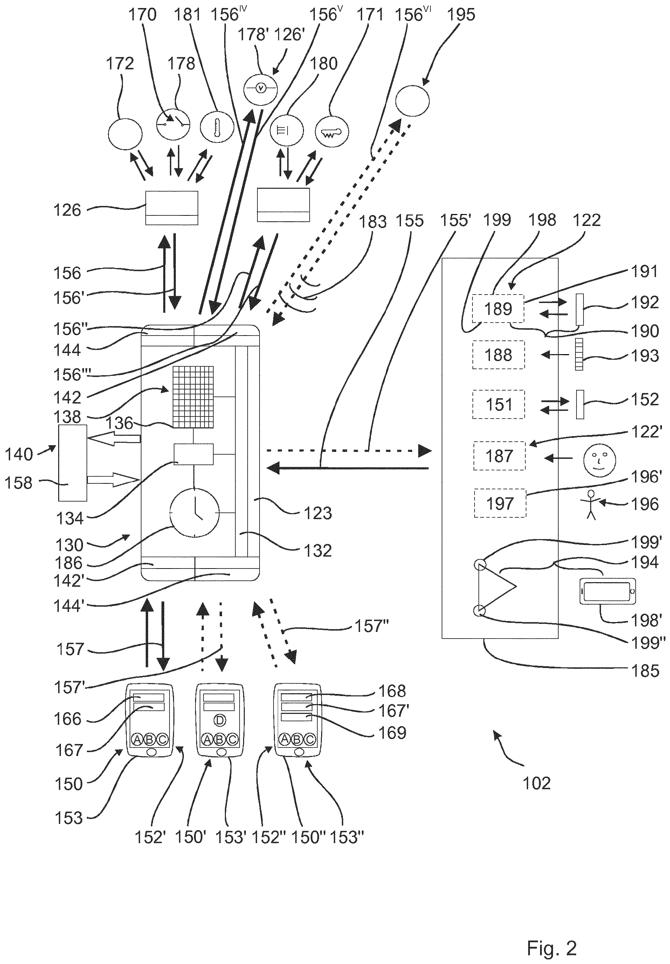

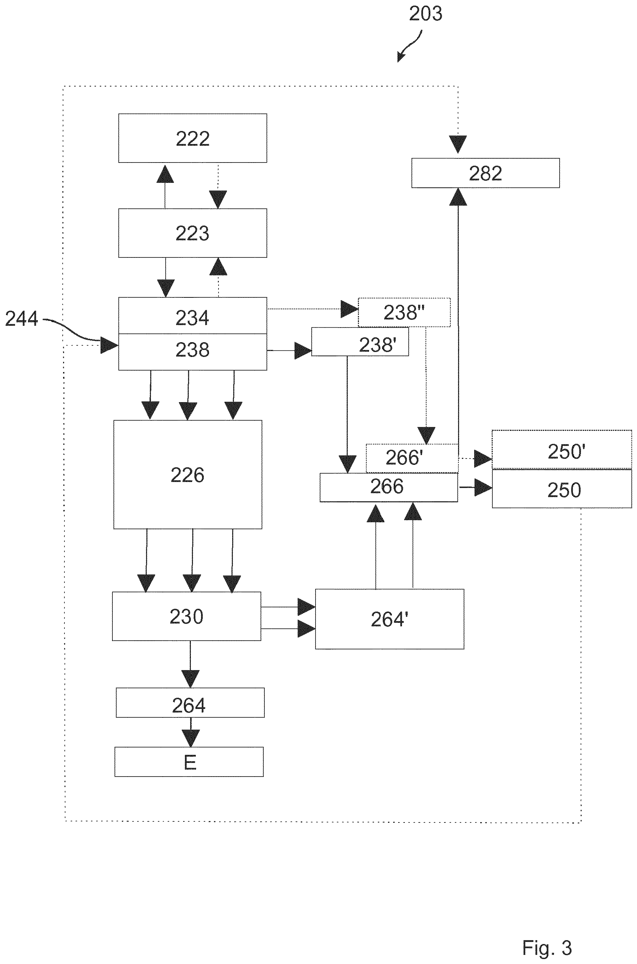

Die in Figur 1 gezeigte Vorrichtung 2 zur Überwachung und die in Figur 2 gezeigte, schematische Konfiguration für Vorrichtungen 102 zur Überwachung umfassen mehrere, gemeinsam in den Vorrichtungen jeweils vorhandene Aspekte, Komponenten und Teile, wobei jeweils erläuterte Vorrichtungsaspekte auch im Zusammenhang mit einem Verfahren zur Überwachung 203 gemäß Figur 3 zum Einsatz kommen können. Daher werden Figur 1, Figur 2 und Figur 3 gemeinsam erläutert.

Eine Vorrichtung 2 zur Überwachung, wie in Figur 1 gezeigt, ist für ein erstes Gebäude 4, ein Verwaltungsgebäude, und ein zweites Gebäude 4', ein Betriebsgebäude, ausgelegt. In die Vorrichtung zur Überwachung 2 ist auch ein weiteres Gebäude 4" wie ein Wohngebäude einbeziehbar. Mit anderen Worten, kann die Vorrichtung 2 zur Überwachung mehrerer Gebäude 4, 4', 4" dienen. An einer in Figur 1 gezeigten Alltagssituation im Zusammenhang mit der Überwachung des Verwaltungsgebäudes 4 und das Betriebsgebäudes 4' werden viele Vorteile der Vorrichtung zur Überwachung 2 besonders gut ersichtlich.

Eine erste Person 13, die das Gebäude 4 durch den Eingangsbereich 8 betreten hatte, ist nach Ende ihrer Arbeitszeit eilends dabei, das Gebäude 4 durch einen Ausgangsbereich 9 zu verlassen. Eingangsbereich 8 und Ausgangsbereich 9 sind in dem Gebäude 4 räumlich benachbart angeordnet, sie können aber auch räumlich sogar zusammenfallen. Im weiteren Verlauf wird die erste Person 13 sich von dem Gebäudebereich 6 entfernen. Ein Innenbereich 7, nämlich ein Laborbereich, und ein Innenbereich 7', nämlich ein Bürobereich, zählen zu den Verantwortlichkeiten der ersten Person 13. In einem Innenbereich 7", der nicht in die Verantwortung der ersten Person 13 fällt, befindet sich eine zweite Person 14. In dem Innenbereich 7''', der nicht in die Verantwortung der ersten Person 13 fällt, befindet sich eine dritte Person 15. Die zweite Person 14 ist als Stellvertreter der Person 13 verantwortlich für den Laborbereich 7. Die dritte Person 15 ist als Stellvertreter der Person 13 verantwortlich für den Innenbereich 7', den Büroinnenbereich.

Die Vorrichtung 2 zur Überwachung greift auf wenigstens eines der in dem System des Gebäudes 4, 4^{I} vorhandenen Datenbanksysteme 82, 82^{I} bei den Behandlungen von Ereignissen und ggf. Einleitung von Maßnahmen zurück.

In dem Ausgangsbereich 9 ist ein Anwesenheitskontrollsystem 85 für Personen 13, 14, 15 installiert. Das Anwesenheitskontrollsystem 85 arbeitet mit einem Zeiterfassungssystem 86, das von der ersten Person 13 durch eine Stechkarte 93 zur Arbeitszeiterfassung ein Signal oder einen Marker zur An- und Abwesenheit der Person aufnehmen kann. Vorliegend, in der in Figur 1 gezeigten Situation, hat die erste Person 13 dem Anwesenheitskontrollsystem 85 ein Ende einer persönlichen Arbeitszeit angezeigt. Die erste Detektionseinrichtung 22 wurde von der ersten Person 13 mit Hilfe eines optisch strukturierten Feldes der Stechkarte 93 personenspezifisch angesprochen, wodurch eine erste Datenübertragungsverbindung 55 von der ersten Detektionseinrichtung 22 zu der Recheneinheit 30 erstellt wurde. Die Detektionseinrichtung 22 umfasst einen Lichtvorhang 80 (von dem in Figur 1 das Lichtquellenband dargestellt ist), über den ein Alarmton auslösbar ist, in dem Fall, dass eine Person, wie die erste Person 13, ihre Stechkarte 93 nicht benutzt. Ein Alarmton kann auch ausgegeben werden, wenn ein Fehlerkorrekturmodul 23 der Recheneinheit 30 erkennt, dass die Stechkarte 93 nicht gelesen wurde. Die Stechkarte 93 ist dann der ersten Detektionseinrichtung 22 zuzuführen. Die Recheneinheit 30 umfasst ein Personendatenauswertmodul 32, das u. a. dazu dient, Daten von der Stechkarte 93 in ein für einen Zuordnungsalgorithmus 34 verarbeitbares Format zu bringen. Der Zuordnungsalgorithmus 34 arbeitet mit einer Adressenzuordnung 38 zusammen, die auf einer ersten Datenspeichereinheit 36 abgelegt ist. Daten von der ersten Datenspeichereinheit 36 sind auf eine mobile Datenspeichereinheit 40 überspielbar, um z. B. bei einer Not-Evakuierung des Gebäudes 4, 4', mitgenommen zu werden. Die Datenanalyseeinrichtung 30 entnimmt der abgespeicherten Adressenzuordnung 38 mit Hilfe des Zuordnungsalgorithmus 34 die zu überprüfenden Objekte 17, 17', 17^{II}, 17^{III}, 17^{IV}, 18, 19, 19', 19", 19^{III}, 19^{IV}, die der ersten Person 13 zugordnet sind. Zu den zugeordneten Objekten gehören zweite Objekte 19^{III}, 19^{IV} wie ein Fenster und eine Raumbeleuchtung. Dabei sind die Objekte 17, 17', 17", 17^{III}, 17^{IV}, 18, 19, 19', 19", 19^{III}, 19^{IV} mit unterschiedlichsten Sensoren ausgestattet. Die Objekt 17^{I}, 17^{II} können mit Sensoren zur Detektion einer Schlossstellung 71 ausgestattet sein. Die Datenanalyseeinrichtung 30 erstellt mit Hilfe der Sendeeinrichtung 42 eine zweite Datenübertragungsverbindung 56, 56', nämlich eine Abfrageverbindung 56 an zweite Detektionseinrichtungen 26, 26'. Eine zweite Detektionseinrichtung 26" und das Objekt 20, beides in dem Verwaltungsgebäude 4 eingezeichnet, die nicht in den Zuständigkeitsbereich der ersten Person 13 fallen, werden bei der Abfrage durch die Datenübertragungsverbindung 56, 56^{I} ausgelassen. Eine zweite Detektionseinrichtung 26 überwacht das Betriebsgebäude 4' und überprüft auch den Zustand von alle jenen Objekten 17, 17', 17", 17^{III}, 17^{IV}, 18, 19, 19', 19", die in einer von der Datenanalyseeinrichtung 30 erstellten Abfrageliste aufgeführt sind. Die Datenanalyseeinrichtung 30 wird über die zweite Datenübertragungsverbindung 56, 56' informiert, dass eines der ersten Objekte 17, eine Leuchte, eingeschaltet und ein weiteres erstes Objekt 18, eine zweite Leuchte, ausgeschaltet ist. In der Adressenzuordnung 38 ist eingeschrieben, dass der Sollzustand der ersten Objekte 17, 18 ein ausgeschalteter Zustand ist. Die Datenanalyseeinrichtung 30 stellt mit Hilfe des Zuordnungsalgorithmus 34 fest, dass ein erstes Objekt 17, die Leuchte, sich nicht in einem Sollzustand befindet. Der Zuordnungsalgorithmus 34 stellt weiterhin fest, dass die Abweichung von dem Sollzustand, die in der Verantwortung der ersten Person 13 liegt, an eine mobile Empfangsstation, die der ersten Person 13 gemäß der Adressenzuordnung 38 zukommt, zu senden ist. Der Zuordnungsalgorithmus 34 bildet in der Datenanalyseeinrichtung 30 ein erstes Alarmzustandssignal 66, das über die Sendeeinrichtung 42 an die Empfangsstation 46 gesendet wird, die eine Ausgabeeinheit 50 zur Anzeige des ersten Alarmzustandssignals 66 umfasst. Die Empfangsstation 46 weist ein Sendemodul 48 auf, mit dem die erste Person 13 eine Antwort auf das Alarmzustandssignal 66 an den Rückmeldeempfänger 44 senden kann, der mit der Datenanalyseeinrichtung 30 in Verbindung steht. Die erste Person 13 wird auch über die Empfangsstation 46 informiert, dass ein erstes Objekt 17", nämlich ein Fensterflügel, in einem geöffneten Zustand vorliegt. Darüber, dass ein weiteres, erstes Objekt 17^{I}, nämlich ein zweiter Fensterflügel geschlossen ist, ergeht keine Mitteilung in Form eines Alarmzustandssignals 66, weil ein Zustand "geschlossener Fensterflügel" als Sollzustand für das Objekt 17^{I} Fensterflügel abgespeichert ist. Der geschlossene Fensterflügel 17' kann auch als erster Betriebszustand 60 und der zweite Fensterflügel, das Objekt 17", sich in einem zweiten Betriebszustand 62 befindet, wobei der erste Betriebszustand 60 auch zugleich ein Sollzustand 64 ist. Weitere durch die zweite Detektionseinrichtung 26 erfassbare Objekte sind z. B. eine Bauwerksinstallation 17^{IV}, nämlich eine Notausgangstür für einen Fluchtweg 9' als Teil eines Gebäudesicherheitssystems 10 mit Notlichtleuchten. Idealerweise hat jedes Gebäude 4, 4^{I}, 4" sein eigenes Gebäudesicherheitssystem 10, 10^{I}, z. B. eigene Notlichtsysteme. Das erste Objekt 17^{IV}, das eine Tür ist, soll zur Schaffung eines abgeschlossenen Raums, also im Sinne einer Raumbegrenzung 74 verschlossen sein. Der Zustand dieses ersten Objekts 17^{IV} ist mittels einer Lichtschranke 80' feststellbar bzw. bestimmbar, mit der eine (Bezugszeichen 26) der Detektionseinrichtungen 26, 26^{I}, 26" verbunden ist. Weitere, als Alarmzustandssignal 66 kenntlich zu machende Objekte sind ein zweites Objekt 19^{I} in Form eines Oszilloskop, ein zweites Objekt 19" in Form einer Gaszufuhrverbindung und ähnliches. Aufgrund einer Schalterstellung 70 ist das Oszilloskop als eingeschaltet identifizierbar. Das zweite Objekt 19" Gaszufuhrverbindung ist die Verbindung zu einem Gasbrenner. Ein weiteres Objekt ist ein Thermostat 81 an einem ersten Objekt 17^{III} in Form eines Heizkörpers. In dem Innenraum 7' befindet sich außerdem ein nicht ausgeschaltetes zweites Objekt 17^{IV} in Gestalt einer Kaffeemaschine, deren Stromversorgung bzw. Stromübertragungsverbindung 76 nicht ausgeschaltet ist. Dieser Zustand einer eingeschalteten, aber unerwünschten Stromversorgung wie die Stromversorgung 76 der Kaffeemaschine wird in das Alarmzustandssignal 66 mit eingebunden. Ein Zustandsaufnehmer 78 für das Messen des Zustands eines Objekts 17^{IV} wie einer Kaffeemaschine ist z. B. ein Temperaturmessgerät, das die Temperatur einer Heizplatte der Kaffeemaschine überwacht. Eine weitere von der Datenanalyseeinrichtung 30 abzufragende zweite Detektionseinrichtung 26' ist eine Empfangsstation 47'. Die Empfangsstation 47^{I} weist als ein zweites Objekt 19 eine bestehende Datenübertragungsverbindung 77 auf. Die Datenübertragungsverbindung 77 schaltet in dem Fall, dass die erste Person 13 den Gebäudebereich 6 verlässt, aus Gründen der Sicherung des Datennetzwerks in einen Zustand einer unterbrochenen Datenübertragungsverbindung 77. Durch das erste Alarmzustandssignal 66 wird die erste Person 13 in das Betriebsgebäude 4' zurückgerufen, solange sich die erste Person 13 noch in einem Gebäudeteil 5 aufhält. Der Gebäudeteil 5 ist Teil eines anderen Gebäudeabschnitts, nämlich des Gebäudes 4, als das Gebäude 4^{I}, für das die erste Person 13 zuständig ist. Die erste Person 13 kann nun in das Gebäude 4' zurückkehren und Abhilfe schaffen. Die erste Person 13 kann aber, als alternative Reaktion zum Zurückkehren, mit ihrer Empfangsstation 46 über das Sendemodul 48 den Rückmeldeempfänger 44 ansprechen und der Datenanalyseeinrichtung 30 anzeigen, dass sie nicht (mehr) verfügbar ist. Aufgrund der in der Adressenzuordnung 38 abgelegten Stellvertreterverantwortlichkeit werden mittels Zuordnungsalgorithmus 34 die zweite Person 14 und die dritte Person 15 benachrichtigt. Hierbei kann die Datenanalyseeinrichtung 30 eine weitere erste Detektionseinrichtung 22' abfragen, um festzustellen, ob sich die zweite Person 14 noch in dem Gebäude 4 befindet. Aufgrund einer bestätigenden Rückmeldung der ersten Detektionseinrichtung 22' an das Personendatenauswertemodul 32 veranlasst die Datenanalyseeinrichtung 30 die Aussendung eines zweiten Alarmzustandssignals 68, das gemäß der Vorgaben der zweiten Person 14 in der Adressenzuordnung 38 auf eine erste Ausgabeeinheit 50', einen Lautsprecher einer Empfangsstation 47, sowie einer zweiten Ausgabeeinheit 50", nämlich auf einen Monitor der Empfangsstation 47 gelangt. Die Empfangsstation 47 kann auch als ein zweites Objekt 20, das in unmittelbarer Verantwortlichkeit der zweiten Person 14 steht, bezeichnet werden. Ein weiteres, zweites Alarmzustandssignal 68' wird auf dem mobilen Empfangsgerät 46' der zweiten Person 14 auf der Ausgabeeinheit 50''' optisch angezeigt. Die zweite Person 14 könnte ihr Bedienelement 72 benutzen und über eine Luftübertragungsverbindung 75 an eine zweite Detektionseinrichtung 26" schickend die Ursache für das Alarmzustandssignal 68^{I} abschalten. Dafür hat die Ausgabeeinheit 50" ein Sendemodul 48'. Die Daten gelangen zu der Datenanalyseeinrichtung 30. Der in der Datenanalyseeinrichtung 30 vorhandene Zuordnungsalgorithmus 34 erkennt eine Stellvertreterzuständigkeit einer dritten Person 15, die sich allerdings bereits in einer privaten Wohnung eines Wohnhauses 4" befindet. Zur dritten Person 15 als Stellvertreter der ersten Person 13 ist in der Adressenzuordnung 38 abgespeichert, dass ein zweites Alarmzustandssignal 68" an die Empfangsstation 47" sowie ein weiteres zweites Alarmzustandssignal 68''' an das mobile Empfangsgerät 46" zu senden ist. Das mobile Empfangsgerät 46" ist ein sogenanntes Smartphone 53, auf dem über das Mobilfunknetz das zweite Alarmzustandssignal 68''' auf der Ausgabeeinheit 50^{IV} zur Anzeige bringbar ist. Die dritte Person 15 kann nun unter Verwendung des Sendemoduls 48", das in dem Smartphone 53 vorhanden ist, mitteilen, dass die dritte Person 15 als Stellvertreter der ersten Person 13 nicht zur Verfügung steht. Die Datenanalyseeinrichtung 30 nimmt die Information, ob eine Person wie die dritte Person 15 zur Verfügung steht, über den Rückmeldeempfänger 44 zur Kenntnis. In ausgewählten Fällen, z. B. wenn keine geeignete Person wie die dritte Person 15 zur Verfügung steht, kann von der Datenanalyseeinrichtung 30, z. B. bei Vorliegen eines Notrufindikators in der Adressenzuordnung 38, ein Notruf an einen Rettungsdienst über eine Notrufzentrale 11 abgesetzt werden. Z. B. weil aufgrund des Objektzustands eines Objekts 19" eine unmittelbare Brandgefahr vorliegt, kann ein Notrufindikator ausgelöst werden.

Anhand der Vorrichtung 102 zur Überwachung eines Gebäudes, wie z. B. den Gebäuden 4, 4^{I}, wird aufgezeigt, dass die Vorrichtung 102 modular aufgebaut und erweiterbar ist. Weiterhin zeigt Figur 2 verschiedene Möglichkeiten von ersten Detektionseinrichtungen 122, 122^{I}, die einzeln oder in Kombination miteinander einsetzbar sind. Eine zentrale Einheit der Vorrichtung 102 ist die Recheneinheit 130, die z. B. als ein Teil eines Gebäudesicherheitssystems (nur auszugsweise dargestellt) vorhanden sein kann. Auf der Recheneinheit 130 befindet sich ein Zuordnungsalgorithmus 134. Der Zuordnungsalgorithmus 134 arbeitet mit einem Zeiterfassungssystem 186 zusammen. Die Datenübertragungsverbindung 155^{I} baut sich zwischen der Recheneinheit 130 und der Detektionseinrichtung 122 zu einem Zeitpunkt auf, der als Initial-Zeitpunkt gilt und mit der Zeit aus dem Zeiterfassungssystem 186 abgestimmt ist. Meldet das Zeiterfassungssystem 186 ein Ereignis, baut die Recheneinheit 130 einen Kontakt zu der Detektionseinrichtung 122 auf.

Solche Ereignisse sind z. B. Anwesenheitsnotizen oder Zeitstempelungen zu Personen, wie der zweiten Person 14. Die Detektionseinrichtung 122 bestätigt die Annahme, die sich aus dem Ereignis des Zeiterfassungssystems 186 ergibt, dass nämlich eine Person, wie z. B. die erste Person 13, sich gerade im Moment in einem Bereich des Gebäudes 4 befindet.

In der Ausgestaltung, die in Figur 2 skizziert ist, teilt das Anwesenheitskontrollsystem 185 über die erste Datenübertragungsverbindung 155 der Recheneinheit 130 mit, dass ein Kontrollereignis eingetreten ist. Mit Hilfe eines zwischen das Anwesenheitskontrollsystem 185 und das Personendatenauswertemodul 132 zwischengeschalteten Fehlerkorrekturmoduls 123, ähnlich zu dem in Figur 1 vorgestellten Fehlerkorrekturmodul 23, ist überprüfbar, ob ein Kontrollereignis durch das Anwesenheitskontrollsystem 185 korrekt bemerkt wurde. Die erste Datenübertragungsverbindung 155' ermöglicht eine Überprüfung des Kontrollereignisses durch mindestens eine erste Detektionseinrichtung 122.

Figur 2 zeigt verschiedene Komponenten einer ersten Detektionseinrichtung 122, die einzeln oder kombinierbar wie das Tablet-PC 151 und das Lesegerät 188 als Detektionseinrichtungen 122, 122^{I} genutzt werden können. Als erste Detektionseinrichtung 122 kann z. B. ein Tablet-PC 151 mit einer Tastatur 152 dienen, über die ein Passwort einzugeben ist. Eine weitere Möglichkeit für eine erste Detektionseinrichtung 122 ist ein Lesegerät 188, mit dem ein optisch strukturiertes Feld 193 erfassbar ist. Als eine erste Detektionseinrichtung 122 ist auch ein Transpondersystem 190 verwendbar, bei dem ein Transponder 189 in der Detektionseinrichtung 122 angeordnet ist. Das Transpondersystem 190 weist einen Mikrowellenemitter 198 und einen Mikrowellendetektor 199 auf. Bei einer Anwesenheitskontrolle wird durch das Transpondersystem 190 ein einer bestimmten Person zugeordnetes Funketikett 192 erfasst. Trägt eine Person das Funketikett 192 bei sich, z. B. in Form eines Unternehmensausweises, ist mit dem Funketikett 192 die jeweilige Person eindeutig identifizierbar ist. Hierbei kann ein von den Mikrowellenemitter 198 als Funksender 191 ausgesendetes Signal von dem Funketikett 192 verändert und zu dem Mikrowellendetektor 199 mit einer bestimmbaren Laufzeit zurückgeschickt werden. Ein zweiter Mikrowellendetektor 199" wird gegebenenfalls zusätzlich benutzt, um eine höhere Sicherheit bei der Ortung von Personen und/oder Funketiketten wie dem Funketikett 192 zu erhalten.

Eine weitere Alternative für ein Anwesenheitskontrollsystem 185 ist eine erste Detektionseinrichtung 122^{I} in Form eines kamerabasierten Gesichtserkennungsmoduls 187, das auch als biometrisches Modul bezeichnet werden kann. Als Alternative, zur Steigerung der Sicherheit ggf. auch zusätzlich, zur Gesichtserkennung mittels dem Gesichtserkennungsmodul 187 können auch weitere biometrische Merkmale mittels Infrarotlichtemitter 196, 196' über einen Infrarotlichtdetektor 197 erfasst werden. Mittels eines für die Anwesenheitskontrolle 185 verwendeten mobilen Funksystems 194 kann sogar neben einer Anwesenheit eine Ortsbestimmung durch Zusammenwirken von einen Mikrowellenemitter 198', der einer Person fest zugeordnet ist, und Mikrowellendetektoren 199, 199' erfolgen.

Die Recheneinheit 130 ist mit einer Sendeeinrichtung 142 und einer Empfängereinrichtung 144 ausgestattet. Abhängig von Daten, ermittelt durch die erste Detektoreinrichtung 122, durch die die Anwesenheit einer Person erfasst ist, und einer in der ersten Datenspeichereinheit 136 abgelegten Adressenzuordnung 138 sind über zweite Datenübertragungsverbindungen, wie die zweiten Datenübertragungsverbindungen 156, 156', 156", 156''', 156^{IV}, 156^{v}, über zweite Detektionseinrichtungen, wie die Detektionseinrichtung 126, Objekte, wie eine Schalterstellung 170, ein Bedienelement 172, eine Steuerung 181, eine Lichtschranke 180, eine Schlossstellung 171 oder ein Zustandsaufnehmer 178, 178', abfragbar. Objekte, wie der Zustandsaufnehmer 178', umfassen die zweite Detektionseinrichtung 126'.

Die Recheneinheit 130 ist ausbaufähig. Die Anzahl der Objekte ist erweiterbar. Beispielsweise kann als ein weiteres Objekt eine Fernbedienung oder ein Fernbedienungsmodul 195 über eine Infrarotsender-/-empfängerschnittstelle mit der Recheneinheit 130 kommunizieren. Eine hierfür erforderliche Infrarotdatenübertragungsverbindung 156^{VI} ist strichliert, eine Verbindung zu der Fernbedienung 195 aufbauend eingetragen.

Die Recheneinheit 130 ist mit einer zweiten Sendeeinrichtung 142' und einem Rückmeldeempfänger 144' ausgestattet, durch die dritte Datenübertragungsverbindungen 157, 157', 157" ausbildbar sind. Die dritte Datenübertagungsverbindung 157 dient der Kommunikation zwischen der Recheneinheit 130 und dem Smartphone 153. Das Smartphone 153 weist eine Ausgabeeinheit 150 auf, auf der eine Tastatur 152' abgebildet ist. Auf der Ausgabeeinheit 150 ist ein erstes Alarmzustandssignal 166 und eine dem ersten Alarmzustandssignal 166 zugeordnete Objektposition bzw. ein Objektstandortsignal 167 ausgebbar.

Eine Person (vgl. Figur 1) kann durch eine Betätigung der Taste A annehmen. Durch die Betätigung der Taste B kann eine Ablehnung des Alarmzustandssignals 166 erfolgen. Durch Betätigung der Taste C ist es möglich der Recheneinheit 130 mitzuteilen, dass ein Fehler vorliegt. Ein Fehler kann z. B. dann vorliegen, wenn eine Person sich über das Vorliegen eines Sollzustands eines Objekts sicher ist, aber ein Alarmzustandssignal, wie das Alarmzustandssignal 166, empfangen wurde. Eine Fehlerrückmeldung C wird dann zusammen mit dem jeweils fehlerbehafteten Alarmzustandssignal in der ersten Datenspeichereinheit 136 vermerkt. Bei Ablehnung B eines ersten Alarmzustandssignals 166 an der Ausgabeeinheit 150 wird die Recheneinheit 130 entsprechend informiert, sodass ein zweites Alarmzustandssignal 168 mit einer zugeordneten Objektposition bzw. einem Objektstandortsignal 167' an ein zweites Smartphone 153" geschickt und auf der Ausgabeeinheit 150" zur Anzeige gebracht wird. Mit dem zweiten Alarmzustandssignal 168 wird eine Personenkennung bzw. ein Personenkennungssignal 169 verschickt. Das Personenkennungssignal 169 erlaubt es einer zweiten Person, die erste Person zu identifizieren und z. B. über eine Ablehnung B zu entscheiden. Die Ablehnung B ist über die Tastatur 152" an der Ausgabeeinheit 150" eingebbar. In Konsequenz verbleibt das erste Alarmzustandssignal 166 auf der ersten Ausgabeeinheit 150. Eine Versendung eines Alarmzustandssignals, wie die Alarmzustandssignale 166, 168, an die dritte Ausgabeeinheit 150' auf dem dritten Smartphone 153' unterbleibt, weil die dem Smartphone 153' zugeordnete Person bereits durch Betätigung einer Abwesenheitstaste, ausgedrückt durch die Ablehnung B oder die Abwesenheit D, ihre dauerhafte Abwesenheit der Recheneinheit 130 angezeigt hat. Wird überraschenderweise an die Recheneinheit 130 von einem der Smartphones 153', 153" eine Annahme A geschickt, so überschreibt diese Information die Adressenzuordnung 138. Damit lassen sich Alarmzustandssignale, wie die Alarmzustandssignale 68, 168, gezielt den verantwortlichen Personen zuführen. Außerdem kann die Recheneinheit 130 selbststätig, basierend auf der Adressenzuordnung 138, nach Alternativen zur Abstellung eines Alarmzustandssignals, wie dem Alarmzustandssignal 166, 168, suchen. Eine Gefahr, die von einem Objektzustand ausgehen könnte, wird verringert. Es werden nur die Personen in die Überwachung einbezogen, die auch in der Adressdatenzuordnung 138 erstens als zuständig vermerkt sind und die zweitens verfügbar sind, um zu einem Objektschutz herangezogen zu werden.

Ein zusätzliches Modul mit einer Datenspeichereinheit 140 dient zum "loggen" der einzelnen Ereignisse. Die Datenspeichereinheit 140 ist mobil gestaltet, sodass der Auswerter der Datenspeichereinheit 140 abseits der Vorrichtung 102 zur Überwachung nachvollziehen kann, welche Personen zunächst für unerwünschte Zustände, z. B. des Zustandsaufnehmers 178, verantwortlich waren und welche Personen sich um Alarmzustandssignale 66, 166 gekümmert haben. Diese Information und Auswertung ermöglicht in automatisierter Weise ein Personendatenauswertemodul 158.

Als Auswerter kann dieser auch noch mit Fernbedienungsmodulen 195 ausgestattet sein, die über Funkverbindungen wie die Bluetooth-Verbindung 183 auf einzelne Objekte eingreifen können, wenn die zuständige Person eine Ablehnung B oder eine Abwesenheit D der Recheneinheit 130 bekannt gegeben hat.

Das Verfahren zur Überwachung 203, das anhand der Figur 3 vorgestellt wird, geht von dem Erfassen einer Person durch eine erste Detektionseinrichtung 222 aus. Es folgt eine Identifizierung einer Person 223, wobei im Falle einer nicht erfolgten Identifizierung eine Wiederholung der Erfassung von Identifikationsdaten zu der Person durch die erste Detektionseinrichtung 222 vornehmbar ist. Nach der Identifizierung der Person 223, die der Datenanalyseeinrichtung vorliegt, wird eine Abfrage einer Datenspeichereinheit durch einen Zuordnungsalgorithmus der Datenanalyseeinrichtung 234 ausgeführt. Dabei erzeugt eine Auswertung der Adressdatenzuordnung in Abhängigkeit der identifizierten Personen zugeordnete Objekte 238 und eine Auswertung der Adressatenzuordnung im Hinblick auf Adressen der Person 238', über die eine (ausgewählte) Person mit Hilfe einer elektronischen Übertragung oder einer Funkübertragung einer Nachricht erreichbar ist. Basierend auf der Auswertung der Adressdatenzuordnung von einem oder mehreren Objekten wie dem Objekt 238 wird eine Abfrage mindestens einer zweiten Detektionseinrichtung 226 von der Datenanalyseeinrichtung durchgeführt. Die von der oder den zweiten Detektionseinrichtungen wie der Detektionseinrichtung 226 erhaltenen Abfrageantworten werden in der Datenanalyseeinrichtung einer Analyse 230 unterzogen. Für die Analyse werden zu dem Objekt jeweils in der Datenspeichereinheit abgespeicherte Solldaten bzw. Sollwerte herangezogen. In einer Abfrageantwort einer zweiten Detektionseinrichtung 226, 230 eine Übereinstimmung mit einem Sollwert 264 aufweist, kommt die Analyse zum Ende E. Es sind keine weiteren Maßnahmen zur Sicherung des analysierten Objekts durch die Person erforderlich. Wenn die Analyse eine Abfrageantwort auf der zweiten Detektionseinrichtung 230 zu einer Diskrepanz mit dem abgespeicherten Sollwert 264' führt, so wird in der Datenanalyseeinrichtung die Erstellung und Übertagung eines Alarmzustandssignals 266 vorgenommen. Bei der Übertragung eines Alarmzustandssignals 266 werden Adressdatenzuordnung zu der Person 238' und der Diskrepanzinformation zu dem Sollwert 264' verwendet. Mit dem Alarmzustandssignal 266 können weitere Informationen, wie eine Objektposition übertragen werden (vgl. Figur 2). Es erfolgt eine Übertragung des erstellten Alarmzustandssignals 266 an eine Empfangsstation 250, die der Person über die Adressdatenzuordnung 238' eindeutig zugewiesen ist. Das erstellte und übertragene Alarmzustandssignal 266 kann außerdem zur Erfassung in einem Datenbanksystem 282 abgelegt werden. Von der Empfangsstation 250 aus kann die Person, die das Alarmzustandssignal 266 empfangen hat, eine Rückfrageverbindung 244 von dem Empfänger zum Zuordnungsalgorithmus aufbauen. Die Erstellung einer Rückfrageverbindung 244 kann ebenfalls zur Erfassung in ein Datenbanksystem 282 geleitet werden und für eine spätere Auswertung zur Verfügung stehen. Bei einer Mitteilung einer Abwesenheit der Person über die Rückfrageverbindung 244 hat der Zuordnungsalgorithmus der Datenanalyseeinrichtung die Möglichkeit, mit einer Abfrage der Datenspeichereinheit 234 eine Stellvertreterperson zu identifizieren. Es ist dann möglich, eine Erfassung der Stellvertreterperson durch eine erste Detektionseinrichtung 222 abzufragen und bei einer erfolgreichen Identifizierung der Stellvertreterperson 222 die Auswertung der Adressdatenzuordnung der Stellvertreterperson 238" vorzunehmen und zusammen mit der Diskrepanz zu dem Sollwert 264' eine Erstellung und Übertragung eines Alarmzustandssignals 266' an die Empfangsstation 250' sowie zur Erfassung an das Datenbanksystem 282 durchzuführen. Damit lässt sich der Zustand von Objekten automatisiert erfassen. Bei einer festgestellten Diskrepanz zu einem Sollwert, der z. B. zu einem Sicherheitsrisiko oder zu einem erhöhten Energieverbrauch führen könnte, werden verantwortliche Personen angehalten, geeignete Maßnahmen zu ergreifen. Die verantwortliche Personen wird informiert, um die Objekte in einen gesicherten Zustand überzuführen, der den Sollwert bzw. Sollzustand ausmacht.

Stellt die Detektionseinrichtung 222 fest, dass eine Person an ihr vorbei ist, werden die Daten aus den dazugehörigen zweiten Detektionseinrichtung 226 abgefragt. Huscht die Person aus dem Gebäude 4, 4', ohne ihren Arbeitsbereich ordnungsgemäß verlassen zu haben, wird die Person durch ein Alarmzustandssignal 266 an ihre Aufgaben erinnert. Ein wiederholtes Fehlverhalten wird im Datenbanksystem 282 abgelegt.

Die in den einzelnen Figuren gezeigten Ausgestaltungsmöglichkeiten lassen sich auch untereinander in beliebiger Form verbinden.

### Bezugszeichenliste

- 2, 102: Vorrichtung zur Überwachung
- 4, 4', 4^{II}: Gebäude, z. B. ein Verwaltungs- oder Betriebsgebäude
- 5: Gebäudeteil, insbesondere Bereich
- 6: Gebäudebereich, insbesondere Nachbarschaft
- 7, 7', 7", 7^{III}: Innenbereich
- 8: Eingangsbereich
- 9, 9^{I}: Ausgangsbereich, insbesondere Fluchtweg
- 10, 10^{I}: Gebäudesicherheitssystem, insbesondere Notlichtsystem
- 11: Notrufzentrale
- 13: erste Person
- 14: zweite Person
- 15: dritte Person
- 17, 17', 17^{II}, 11^{III}, 17^{IV}: erstes Objekt, insbesondere Bauwerksinstallation
- 18: erstes Objekt,
- 19, 19', 19", 19^{III}, 19^{IV}: zweites Objekt, insbesondere Betriebsinstallation
- 20: zweites Objekt
- 22, 22^{I}, 122, 122^{I}: erste Detektionseinrichtung
- 23, 123: Fehlerkorrekturmodul
- 26, 26', 26", 126, 126': zweite Detektionseinrichtung
- 30, 130: Datenanalyseeinrichtung, insbesondere Recheneinheit
- 32, 132: Personendatenauswertemodul
- 34, 134: Zuordnungsalgorithmus
- 36, 136: erste Datenspeichereinheit
- 38, 138: Adressenzuordnung
- 40, 140: zweite Datenspeichereinheit, insbesondere mobile Datenspeichereinheit
- 42, 142, 142': Sendeeinrichtung, insbesondere Sender
- 44, 144, 144': Empfängereinrichtung, insbesondere Rückmeldeempfänger
- 46, 46', 46": Empfangsstation, insbesondere mobiles Empfangsgerät,
- 47, 47', 47": Empfangsstation, insbesondere Empfangsgerät
- 48, 48^{I}, 48": Sendemodul
- 50, 50', 50", 50^{III}, 50^{IV}, 150, 150', 150": Ausgabeeinheit
- 151: Tablet-PC
- 152, 152', 152": Tastatur, insbesondere Eingabesegment
- 53, 153, 153', 153": Smartphone
- 55, 155, 155': erste Datenübertragungsverbindung
- 56, 56', 156, 156', 156", 156^{III}, 156^{IV}, 156^{I}, 156^{VI}: zweite Datenübertragungsverbindung, z. B. eine Abfrageverbindung
- 157, 157', 157": dritte Datenübertragungsverbindung, insbesondere Rückfrageverbindung
- 158: Personendatenauswertemodul
- 60: erster Betriebszustand, insbesondere eines Objekts
- 62: zweiter Betriebszustand, insbesondere eines Objekts
- 64: Sollzustand
- 66, 166: erstes Alarmzustandssignal
- 167, 167': Objektstandortssignal
- 68, 68^{I}, 68^{II}, 68^{III}, 168: zweites Alarmzustandssignal
- 169: Personenkennungssignal
- 70, 170: Schalterstellung
- 71, 171: Schlossstellung
- 72, 172: Bedienelement
- 74: Raumbegrenzung
- 75: Luftübertragungsverbindung
- 76: Stromübertragungsverbindung
- 77: Datenübertragungsverbindung
- 78, 178, 178': Zustandsaufnehmer, insbesondere elektrische Kontaktstelle
- 80, 80', 180: Lichtschranke oder Lichtvorhang
- 81, 181: Steuerung, insbesondere Thermostat
- 82, 82^{I}: Datenbanksystem
- 183: Funkverbindung, insbesondere Bluetooth-Verbindung
- 85, 185: Anwesenheitskontrollsystem
- 86, 186: Zeiterfassungssystem, insbesondere Stechuhr
- 187: Gesichtserkennungsmodul
- 188: Lesegerät
- 189: Transponder
- 190: Transpondersystem
- 191: Funksender
- 192: Funketikett
- 93, 193: optisch strukturiertes Feld, insbesondere Stechkarte
- 194: Funksystem, insbesondere Triangulationssystem
- 195: Fernbedienungsmodul
- 196, 196': Infrarotlichtemitter
- 197: Infrarotlichtdetektor
- 198, 198': Mikrowellenemitter
- 199, 199', 199": Mikrowellendetektor
- 203: Verfahren zur Überwachung
- 222: Erfassung einer Person durch eine erste Detektionseinrichtung
- 223: Identifizierung einer Person
- 226: Abfrage der zweiten Detektionseinrichtung
- 230: Analyse von mindestens einer Abfrageantworten aus der zweiten Detektionseinrichtung
- 234: Abfrage Datenspeichereinheit durch Zuordnungsalgorithmus der Datenanalyseeinrichtung
- 238: Auswertung Adressdatenzuordnung Objekt
- 238', 238": Auswertung Adressdatenzuordnung Person
- 244: Rückfrageverbindung von dem Empfänger zum Zuordnungsalgorithmus
- 264: Übereinstimmung Abfrageantwort mit Sollzustandsinformation
- 264': Diskrepanz Abfrageantwort und Sollzustandsinformation
- 250, 250': Empfangsstation mit Anzeige
- 266, 266': Erstellung und Übertragung eines Alarmzustandssignals
- 282: Erfassung von Information in einem Datenbanksystem
- A: Annahme
- B: Ablehnung
- C: Fehler
- D: Abwesenheit
- E: Ende

## Patentansprüche

1. Vorrichtung (2, 102) zur Überwachung eines Gebäudes (4, 4', 4^{II}),
das von mindestens einer Person (13, 14, 15) frequentierbar ist,
wobei die Vorrichtung (2, 102) in einem Gebäudebereich (6) mindestens eine erste Detektionseinrichtung (22, 22^{I}, 122, 122^{I}) und
mindestens eine zweite Detektionseinrichtung (26, 26', 26", 126, 126'), die mindestens einen Zustand mindestens eines dem Gebäude (4, 4', 4^{II}) zugeordneten Objekts (17, 17', 17^{II}, 17^{III}, 17^{IV}, 18, 19, 19', 19^{II}, 19^{III}, 19^{IV}, 20) erfasst, aufweist,
wobei eine Komponente der Vorrichtung (2, 102) eine Datenanalyseeinrichtung (30, 130) ist, die mit der ersten Detektionseinrichtung (22, 22^{I}, 122, 122^{I}) in einer ersten Datenübertragungsverbindung (55, 155, 155') steht und die zu der zweiten Detektionseinrichtung (26, 26', 26", 126, 126') eine zweite Datenübertragungsverbindung (56, 56', 156, 156', 156", 156^{III}, 156^{IV}, 156^{V}, 156^{VI}) erstellen kann, und
die Datenanalyseeinrichtung (30, 130) eine erste Datenspeichereinheit (36, 136) umfasst und
mit einer Sendeeinrichtung (42, 142, 142') ausgestattet ist, die eine Signalübertragung an eine Empfangsstation (46, 46', 46", 47, 47', 47", 53, 151, 153, 153', 153") ermöglicht, wobei die Empfangsstation (46, 46', 46", 47, 47', 47", 53, 151, 153, 153', 153") einer einzelnen, insbesondere der einzelnen Person (13, 14, 15), zugeordnet ist,
**dadurch gekennzeichnet, dass**
die erste Detektionseinrichtung (22, 22^{I}, 122, 122^{I}) für eine individuelle Erkennung der Person (13, 14, 15) anhand mindestens eines Erkennungszeichens gestaltet ist und die Datenspeichereinheit (36, 136) eine Adressenzuordnung (38, 138) von dem Objekt (17, 17', 17^{II}, 17^{III}, 17^{IV}, 18, 19, 19', 19^{II}, 19^{III}, 19^{IV}, 20) zu mindestens einer Person (13, 14, 15) aufweist, zu der Daten eines Zuständigkeitsbereichs oder eines Aufgabenbereichs festgelegt sind, und
die Datenanalyseeinrichtung (30, 130) mit einem Zuordnungsalgorithmus (34, 134) ausgestattet ist, der dafür vorgesehen ist, eine dritte Datenübertragungsverbindung (157, 157', 157^{II}) von der Sendeeinrichtung (42, 142, 142') zu der Empfangsstation (46, 46', 46", 47, 47', 47", 53, 151, 153, 153', 153"), ausgelöst durch ein Signal (222, 223) von der ersten Detektionseinrichtung (22, 22^{I}, 122, 122^{I}) und mittels der Adressenzuordnung (38, 138, 238, 238', 238") in Reaktion auf eine Abfrageantwort (226, 230, 264') der zweiten Detektionseinrichtung (26, 26', 26", 126, 126'), zu erstellen.

2. Vorrichtung (2, 102) gemäß Anspruch 1, **dadurch gekennzeichnet, dass**
die erste Detektionseinrichtung (22, 22^{I}, 122, 122^{I}) oder die zweite Detektionseinrichtung (26, 26', 26", 126, 126') eine räumliche Koordinate (167, 167') oder einen Betriebszustand (60, 62) als den Zustand erfasst.

3. Vorrichtung (2, 102) gemäß einem der vorhergehenden Ansprüche,
**dadurch gekennzeichnet, dass**
die Empfangsstation (46, 46', 46", 47, 47', 47", 53, 151, 153, 153', 153") ein mobiles, tragbares Empfangsgerät ist.

4. Vorrichtung (2, 102) gemäß einem der vorhergehenden Ansprüche,
**dadurch gekennzeichnet, dass**
die dritte Datenübertragungsverbindung (157, 157', 157^{II}) eine personalisierte Datenübertragungsverbindung (157, 157', 157^{II}) ist.

5. Vorrichtung (2, 102) gemäß Anspruch 1, **dadurch gekennzeichnet, dass**
der Zustand eine durch manuelle Betätigung einnehmbare Stellung (70, 71, 170, 171), insbesondere eine Einstellung, des Objekts (17, 17', 17", 17^{III}, 17^{IV}, 18, 19, 19', 19^{II}, 19 ^{III}, 19^{IV}, 20) ist, wie eine Schalterstellung (70, 170) oder eine Schlossstellung (71, 171).

6. Vorrichtung (2, 102) gemäß einem der Ansprüche 2 bis 4,
**dadurch gekennzeichnet, dass**
der Betriebszustand (60, 62) mit einem Verlust von elektrischer oder thermischer Energie, die in dem Gebäude (4, 4', 4^{II}) bereitsteht, einhergeht.

7. Vorrichtung (2, 102) gemäß Anspruch 1,
**dadurch gekennzeichnet, dass**
der Zustand durch ein bi-modales Datum ausdrückbar ist, wie eine über ein Bedienelement (72, 172) einstellbare, insbesondere geometrische oder funktionale, Raumbegrenzung (74) in einem Bereich (7) des Gebäudes (4'), wobei insbesondere die Raumbegrenzung (74) eine Luftübertragungsverbindung (75), eine Stromübertragungsverbindung (76) oder eine Datenübertragungsverbindung (77) betrifft.

8. Vorrichtung (2, 102) gemäß einem der vorhergehenden Ansprüche,
**dadurch gekennzeichnet, dass**
mindestens ein Zustandsaufnehmer vorgesehen ist, wie eine elektrische Kontaktstelle (78, 178, 178'), eine Lichtschranke (80, 80', 180) oder eine Steuerung (81, 181), wie ein Thermostat (81), durch den der Zustand, vorzugsweise sensorisch, ermittelbar und vorzugsweise als ein elektronisches Signal digitalisierbar ist.

9. Vorrichtung (2, 102) gemäß einem der vorhergehenden Ansprüche,
**dadurch gekennzeichnet, dass**
ein Datenbanksystem (82, 82', 282) vorgesehen ist, das vorzugsweise die Adressenzuordnung (38, 138) enthält, wobei ein von der Datenanalyseeinrichtung (30, 130) erkanntes Zuordnungsereignis (264, 264') in dem Datenbanksystem (82, 82', 282), das vorzugsweise mit einer zweiten, vorzugsweise mobilen, Datenspeichereinheit (40, 140) verbunden ist, insbesondere auf der zweiten Datenspeichereinheit (40, 140), abspeicherbar und, insbesondere aus der zweiten Datenspeichereinheit (40, 140), auslesbar ist.

10. Vorrichtung (2, 102) gemäß einem der vorhergehenden Ansprüche,
**dadurch gekennzeichnet, dass**
die Datenanalyseeinrichtung (30, 130) mit einem Zeiterfassungssystem (86, 186) verbunden ist, wobei in der ersten Datenspeichereinheit (36, 136) mindestens eine Uhrzeit und vorzugsweise mindestens ein Kalenderdatum gespeichert ist, wobei der Zuordnungsalgorithmus (34, 134) durch einen Vergleich einer von dem Zeiterfassungssystem (86, 186) bestimmten Zeit, wie eine aktuelle Uhrzeit und insbesondere ein aktuelles Kalenderdatum, wie ein Wochentag, mit der gespeicherten Uhrzeit und insbesondere dem gespeicherten Datum bei einer Zuordnungsübereinstimmung initialisiert ist.

11. Vorrichtung (2, 102) gemäß einem der vorhergehenden Ansprüche,
**dadurch gekennzeichnet, dass**
die erste Detektionseinrichtung (22, 22', 122, 122') ein Anwesenheitskontrollsystem (85, 185), wie ein Fingereingabesystem (152, 152', 152"), eine Stechuhr (86, 186), ein biometrisches Erfassungssystem (196, 196', 197), wie ein optisches Gesichtserkennungsmodul (187), oder ein Lesegerät (189), z. B. für ein mit elektromagnetischen Wellen, insbesondere mit Radiowellen, auslesbares, optisch strukturiertes Feld (93, 193) oder einen Transponder (189, 190, 191, 192), umfasst.

12. Vorrichtung (2, 102) gemäß einem der vorhergehenden Ansprüche,
**dadurch gekennzeichnet, dass**
die erste Detektionseinrichtung (22, 22^{I}, 122, 122^{I}) eine Ortsbestimmungseinrichtung, wie ein Mobilfunksystem (194) oder ein Transpondersystem (190), das mit Signalpegelmessungen oder Signallaufzeitmessungen zwischen einem Funksender (191) und einem Funketikett (192) arbeitet, umfasst, wobei ein Mobilfunkgerät (46, 46', 46", 48, 48^{I}, 48") oder das Funketikett (192) einer Person (13, 14, 15) eindeutig zuordnenbar ist.

13. Vorrichtung (2, 102) gemäß einem der vorhergehenden Ansprüche,
**dadurch gekennzeichnet, dass**
die erste Detektionseinrichtung (22, 22^{I}, 122, 122^{I}) mit einem Fehlerkorrekturmodul (23, 123), wie einem Redundanzprüfer, ausgestattet ist.

14. Vorrichtung (2, 102) gemäß einem der vorhergehenden Ansprüche,
**dadurch gekennzeichnet, dass**
die Empfangsstation (46, 46', 46", 47, 47', 47", 53, 151, 153, 153', 153") ein Laptop, ein Tablet-PC (151), ein Smartphone (53, 153, 153', 153") oder ein Personenrufempfänger, wie ein Pager, ist.

15. Vorrichtung (2, 102) gemäß einem der vorhergehenden Ansprüche,
**dadurch gekennzeichnet, dass**
das Objekt (19, 19') ein Fernbedienungsmodul (195) aufweist, das von der Empfangsstation (46, 46', 46", 47, 47', 47", 53, 151, 153, 153', 153") durch die Datenanalyseeinrichtung (30, 130) über mindestens eine Datenübertragungsverbindung (56, 56', 156, 156', 156", 156^{III}, 156^{IV}, 156^{V}, 156^{VI}, 157, 157', 157") ansteuerbar ist, wobei das Objekt (19, 19') durch das Fernbedienungsmodul (195) von einem ersten Betriebszustand (60) in einen zweiten Betriebszustand (62), insbesondere einen Ruhezustand oder einen gesicherten Zustand (64), verbringbar ist.

16. Vorrichtung (2, 102) gemäß einem der vorhergehenden Ansprüche,
**dadurch gekennzeichnet, dass**
mindestens eine Datenübertragungsverbindung (56, 56', 155, 155', 156, 156', 156", 156^{III}, 156^{IV}, 156^{V}, 156^{VI}, 157, 157', 157") eine Kurzstreckenfunkverbindung in einem 2,4000-Gigahertz- bis 2,4835-Gigahertz-Frequenzband oder in einem 5,150-Gigahertzbis 5,725-Gigahertz-Frequenzband ist, die insbesondere nach König Blauzahn benannt ist, mit einer Reichweite, durch die eine Größe eines Gebäudekomplexes (4, 4', 4", 6) abdeckbar ist, insbesondere eine Reichweite von nicht mehr als 100 Metern, vorzugsweise nicht mehr als 50 Metern, wobei insbesondere eine Datenübertragungsrate nicht mehr als 3 Megabit pro Sekunde beträgt.

17. Vorrichtung (2, 102) gemäß einem der vorhergehenden Ansprüche,
**dadurch gekennzeichnet, dass**
mindestens eine Datenübertragungsverbindung (56, 56', 155, 155', 156, 156', 156", 156^{III}, 156^{IV}, 156^{V}, 156^{VI}, 157, 157', 157") einen Infrarotlichtemitter (196') und einen Infrarotlichtdetektor (197), die insbesondere für einen Infrarotwellenlängenbereich von 850 Nanometer bis 2000 Nanometer vorgesehen sind, und/oder einen Mikrowellenemitter (198, 198') und einen Mikrowellendetektor (199, 199', 199") umfasst.

18. Vorrichtung (2, 102) gemäß einem der vorhergehenden Ansprüche,
**dadurch gekennzeichnet, dass**
mindestens eine Datenübertragungsverbindung (55, 155, 155', 56, 56', 156, 156', 156", 156^{III}, 156^{IV}, 156^{V}, 156^{VI}, 157, 157', 157") kennwortgeschützt ist, wobei insbesondere ein Kennwort für einen Schutz von Daten vor einem unbefugtem Zugriff auf die Daten, die durch die Datenübertragungsverbindung (55, 155, 155', 56, 56', 156, 156', 156", 156^{III}, 156^{IV}, 156^{V}, 156^{VI}, 157, 157', 157^{II}) bereitgestellt werden, auf der Datenanalyseeinrichtung (30, 130) und auf der Empfangsstation (46, 46', 46", 47, 47', 47", 53, 151, 153, 153', 153") vorhanden ist.

19. Vorrichtung (2, 102) gemäß einem der vorhergehenden Ansprüche,
**dadurch gekennzeichnet, dass**
die Vorrichtung (2, 102) einen Teil eines Gebäudesicherheitssystems (10, 10^{I}), wie ein Notlichtsystem, bildet und
insbesondere zur Überwachung eines Innenbereichs (7, 7', 7", 7^{III}) eines Verwaltungs-(4) oder Geschäftsgebäudes (4') dient.

20. Verfahren (203) zur Überwachung eines Gebäudes (4, 4', 4"),
wobei eine erste Detektionseinrichtung (22, 22^{I}, 122, 122^{I}) für ein Erfassen (222) einer Person (13, 14, 15) zumindest in einem Bereich (5, 6, 7, 7', 7", 7^{III}) des Gebäudes (4, 4', 4"), wie einem Ausgangsbereich (9, 9^{I}) und/oder einem Eingangsbereich (8) eines Gebäudeteils (5) oder des Gebäudes (4, 4', 4^{II}) oder wie in Nachbarschaft (6) zu dem Gebäude (4, 4', 4^{II}), vorhanden ist und
auf einer mit der ersten Detektionseinrichtung (22, 22^{I}, 122, 122^{I}) verbundenen Recheneinheit (30, 130) ein Programm läuft, durch das eine Identifizierung (223) der Person (13, 14, 15) in einem Personendatenauswertemodul (32, 132) vornehmbar ist, wobei die Recheneinheit (30, 130) mit einem Sender (42, 142, 142') für eine Datenübertragung an ein Empfangsgerät (46, 46', 46", 47, 47', 47", 53, 151, 153, 153', 153") verbunden ist,
**dadurch gekennzeichnet, dass**
die erste Detektionseinrichtung (22, 22^{I}, 122, 122^{I}) für eine individuelle Erkennung der Person (13, 14, 15) anhand mindestens eines Erkennungszeichens gestaltet ist und in einem elektronischen Datenspeicher (36, 40, 136, 140) der Recheneinheit (30, 130) ein Adressdatenfeld (38, 138) abgespeichert ist,
das einen Zusammenhang (234, 238, 238', 238") von Personendaten (169), die eine Nachrichtenübermittlung zu mindestens einer Person (13, 14, 15) ermöglichen, mit mindestens einer zu überwachenden Einheit (17, 17', 17^{II}, 17^{III}, 17^{IV}, 18, 19, 19', 19^{II}, 19^{III}, 19^{IV}, 20) bereitstellt und eine Sollzustandsinformation (64, 264, 264') zu der zu überwachenden Einheit (17, 17', 17^{II}, 17^{III}, 17^{IV}, 18, 19, 19', 19^{II}, 19^{III}, 19^{IV}, 20) aufweist, wobei zu der Person (13, 14, 15) Daten eines Zuständigkeitsbereichs oder eines Aufgabenbereichs festgelegt sind, und
die Recheneinheit (30, 130) die Personendaten (169, 223) der in dem Personendatenauswertemodul (32, 132) identifizierten Person (13, 14, 15) abfragt und durch die Recheneinheit (30, 130, 234) über mindestens eine zweite, mit der Recheneinheit (30, 130) verbundene Detektionseinrichtung (26, 26', 26", 126, 126', 226, 230) mindestens ein Betriebszustand (60, 62) für die der Person (13, 14, 15) zuordenbare, zu überwachende Einheit (17, 17', 17^{II}, 17^{III}, 17^{IV}, 18, 19, 19', 19^{II}, 19^{III}, 19^{IV}, 20) ermittelt wird, und
bei Auffinden (230, 234) eines von der Sollzustandsinformation (64) abweichenden Betriebszustands (264') der zu überwachenden Einheit (17, 17', 17^{II}, 17^{III}, 17^{IV}, 18, 19, 19', 19^{II}, 19^{III}, 19^{IV}, 20) durch die Recheneinheit (30, 130) ein Alarmzustandssignal (66, 68, 68^{I}, 68^{II}, 68^{III}, 166, 167, 167', 168) als eine Benachrichtigung über den Sender (42, 142, 142') an mindestens ein der Person (13, 14, 15) über die Personendaten zugeordnetes Empfangsgerät (46, 46', 46", 47, 47', 47", 53, 151, 153, 153', 153", 250, 250', 266, 266') gesendet wird.

21. Verfahren (203) nach Anspruch 20, **dadurch gekennzeichnet, dass**
das Empfangsgerät (46, 46', 46", 47, 47', 47", 53, 151, 153, 153', 153", 250, 250', 266, 266') ein Sendemodul (48, 48^{I}, 48") umfasst und die Recheneinheit (30, 130) mit einem Rückmeldeempfänger (44, 144, 144') für das Sendemodul (48, 48^{I}, 48") verbunden ist, wobei durch die Person (13, 14, 15) ein Alarmzustandssignal (66, 68, 68^{I}, 68^{II}, 68^{III}, 166, 167, 167', 168) über das Sendemodul (48, 48^{I}, 48") als Signalempfang (A) oder als Fehlalarm (C) bestätigbar ist.

22. Verfahren (203) nach Anspruch 20 oder 21, **dadurch gekennzeichnet, dass**
die erste Detektionseinrichtung (122, 122^{I}) eine erste Ortsbestimmung durch eine Lateration oder eine Angulation, vorzugsweise eine Trilateration oder eine Triangulation (194), von wenigstens einer Person (13, 14, 15) durchführt.

23. Verfahren (203) nach einem der Ansprüche 20 bis 22, **dadurch gekennzeichnet, dass**
das Alarmzustandssignal (66, 68, 68^{I}, 68^{II}, 68^{III}, 166, 167, 167', 168) eine, vorzugsweise in dem Adressdatenfeld (38, 138) vorhandene, Bezeichnung der zu überwachenden Einheit (17, 17', 17^{II}, 17^{III}, 17^{IV}, 18, 19, 19', 19^{II}, 19^{III}, 19^{IV}, 20) und insbesondere eine Angabe eines Standorts (167, 167') der zu überwachenden Einheit (17, 17', 17^{II}, 17^{III}, 17^{IV}, 18, 19, 19', 19^{II}, 19^{III}, 19^{IV}, 20) umfasst, wobei vorzugsweise diese Informationen durch das Empfangsgerät (46, 46', 46", 47, 47', 47", 53, 151, 153, 153', 153", 250, 250', 266, 266') anzeigbar sind.

24. Verfahren (203) nach einem der Ansprüche 20 bis 23, **dadurch gekennzeichnet, dass**
das Alarmzustandssignal (66, 68, 68^{I}, 68^{II}, 68^{III}, 166, 167, 167', 168) in vorgebbaren Zeitintervallen gesendet wird, und vorzugsweise in mindestens eine akustische, optische oder haptische Pegeländerung einer Ausgabeeinheit (50, 50', 50", 50^{III}, 50^{IV}, 150, 150', 150") des Empfangsgeräts (46, 46', 46", 47, 47', 47", 53, 151, 153, 153', 153", 250, 250', 266, 266') gewandelt wird.

25. Verfahren (203) nach einem der Ansprüche 20 bis 24, **dadurch gekennzeichnet, dass**
die Person (13, 14, 15) eine erste Person (13) ist, wobei das der ersten Person (13) zugeordnete Empfangsgerät (46, 153, 250, 266) eine Rückfrageverbindung (157, 244) durch das Sendemodul (48) zu dem Rückmeldeempfänger (44, 144') aufbaut, wodurch die Recheneinheit (30, 130) veranlasst wird, das Alarmzustandssignal (66, 68, 68^{I}, 68^{II}, 68^{III}, 166, 167, 167', 168) an ein zweites Empfangsgerät (46', 46", 47, 47', 47", 53, 151, 153', 153", 250', 266') einer zweiten Person (14, 15) zu leiten, die in dem Adressdatenfeld (38, 138) als ein Stellvertreter, insbesondere ein erster Stellvertreter, der ersten Person (13) vorgesehen ist,
wobei das Alarmzustandssignal ein erstes Alarmzustandssignal (66, 166, 167) ist, das erst dann von der Recheneinheit (30, 130) beendet wird, wenn mit Hilfe der ersten Detektionseinrichtungen (22, 22^{I}, 122, 122^{I}) ein Aufenthaltsort der zweiten Person (14, 15) in dem Gebäude (4, 4') bestätigt ist und eine Übernahme (A) eines zweiten Alarmzustandssignals (68, 68^{I}, 68^{II}, 68^{III}, 167', 168) an dem zweiten Empfangsgerät (46', 46", 47, 47', 47", 53, 151, 153', 153", 250', 266'), das ein zweites Sendemodul (48^{I}, 48") umfasst, an die Recheneinheit (30, 130) bestätigt wurde.

26. Verfahren (203) nach Anspruch 25, **dadurch gekennzeichnet, dass**
das zweite Alarmzustandssignal (68, 68^{I}, 68^{II}, 68^{III}, 167', 168) eine Absenderkennung (169) umfasst, die von dem zweiten Empfangsgerät (46', 46", 47, 47', 47", 53, 151, 153', 153", 250', 266') ausgegeben wird, wobei durch die Absenderkennung (169) die erste Person (13) identifizierbar ist, und insbesondere eine Ablehnung (B) des zweiten Alarmzustandssignals (66, 68, 68^{I}, 68^{II}, 68^{III}, 166, 167, 167', 168) über eine zweite Rückfrageverbindung (157', 157" 244) des zweiten Empfangsgeräts (46', 46", 47, 47', 47", 53, 151, 153', 153", 250', 266') erfolgen kann.

27. Verfahren (203) nach einem der Ansprüche 20 bis 26, **dadurch gekennzeichnet, dass**
über ein Sendemodul (48, 48^{I}, 48") einer Empfangseinheit (46, 46', 46", 47, 47', 47", 53, 151, 153, 153', 153", 250, 250', 266, 266') in Verbindung mit der Recheneinheit (30, 130) ein Abwesenheitsindikator (D) für eine Person (13, 14, 15) in dem Adressdatenfeld (38, 138) setzbar ist, wobei die Recheneinheit (30, 130) aus einer Untergruppe oder aus einer Gesamtheit der in dem Adressdatenfeld (38, 138) enthaltenen Personendaten von einer Mehrzahl von Personen (13, 14, 15) eine weitere Person (13, 14, 15), insbesondere mit Hilfe einer Personenanwesenheitskontrolle (85, 185) durch die erste Detektionseinrichtung (22, 22^{I}, 122, 122^{I}), auswählt, und ein weiteres Alarmzustandssignal (66, 68, 68^{I}, 68^{II}, 68^{III}, 166, 167, 167', 168) an ein weiteres Empfangsgerät (46, 46', 46", 47, 47', 47", 53, 151, 153, 153', 153", 250, 250', 266, 266') sendet.

28. Verfahren (203) nach einem der Ansprüche 20 bis 27, **dadurch gekennzeichnet, dass**
die Recheneinheit (30, 130) über den Sender (42, 142, 142') einen Notruf (11) aussendet, wenn die zu überwachende Einheit (17, 17', 17^{II}, 17^{III}, 17^{IV}, 18, 19, 19', 19^{II}, 19^{III}, 19^{IV}, 20) in dem Adressdatenfeld (38, 138) einen Notrufindikator enthält und insbesondere eine Bestätigung (A) des Empfangs des Alarmzustandssignals (66, 68, 68^{I}, 68^{II}, 68^{III}, 166, 167, 167', 168) in einem vorgegebenen Zeitintervall von der Recheneinheit (30, 130) nicht vermerkt worden ist.

29. Verfahren (203) nach einem der Ansprüche 20 bis 28, **dadurch gekennzeichnet, dass**
alle Alarmzustandssignale (66, 68, 68^{I}, 68^{II}, 68^{III}, 166, 167, 167', 168) zusammen mit dem Betriebszustand (60, 62, 264, 264') und mit mindestens einem Personendatum (169, 223) in einem Datenbanksystem (82, 82', 282) gespeichert und für eine vorgegebene Zeitspanne nach einer Alarmhäufigkeit (A, B), wie eine Fehlalarmhäufigkeit (C), analysierbar sind.

30. Verfahren (203) nach einem der Ansprüch 20 bis 29, **dadurch gekennzeichnet, dass**
das Adressdatenfeld (38, 138) eine Sollzustandsinformation (64, 264, 264') zu jeder zu überwachenden Einheit (17, 17', 17^{II}, 17^{III}, 17^{IV}, 18, 19, 19', 19^{II}, 19^{III}, 19^{IV}, 20) aufweist.

31. Verfahren (203) nach einem der Ansprüche 20 bis 30, **dadurch gekennzeichnet, dass**
das Verfahren mit einer Vorrichtung (2, 102) gemäß einem der Ansprüche 1 bis 19 durchgeführt wird.

## Claims

1. A device (2, 102) for monitoring a building (4, 4', 4") that is frequentable by at least one person (13, 14, 15),
wherein the device (2, 102) has in a building section (6) at least one first detection apparatus (22, 22', 122, 122') and at least one second detection apparatus (26, 26', 26", 126, 126') which detects at least one state of at least one object (17, 17', 17", 17^{III}, 17^{IV}, 18, 19, 19', 19", 19^{III}, 19^{IV}, 20) associated with the building (4, 4', 4"),
wherein a component of the device (2, 102) is a data analysis apparatus (30, 130) which is in connection with the first detection apparatus (22, 22', 122, 122') in a first data transmission connection (55, 155, 155') and which can establish a second data transmission connection (56, 56', 156, 156', 156", 156^{III}, 156^{IV}, 156^{V}, 156^{VI}) to the second detection apparatus (26, 26', 26", 126, 126'), and
the data analysis apparatus (30, 130) comprises a first data storage unit (36, 136), and
is provided with a transmission device (42, 142, 142'), enabling a signal transmission to a receiving station (46, 46', 46", 47, 47', 47", 53, 151, 153, 153', 153"),
wherein the receiving station (46, 46', 46", 47, 47', 47", 53, 151, 153, 153', 153") is associated with an individual, in particular said individual person (13, 14, 15),
**characterized in that**
the first detection apparatus (22, 22', 122, 122') is designed for an individual recognition of the person (13, 14, 15) based on at least one identifier and the data storage unit (36, 136) has an address allocation (38, 138) from the object (17, 17', 17", 17^{III}, 17^{IV}, 18, 19, 19', 19", 19^{III}, 19^{IV}, 20) to at least one person (13, 14, 15) for which the data of an area of responsibility or a task area is specified, and
the data analysis apparatus (30, 130) is provided with an allocation algorithm (34, 134) that is provided to prepare a third data transmission connection (157, 157', 157") from the transmission device (42, 142, 142') to the receiving station (46, 46', 46", 47, 47', 47", 53, 151, 153, 153', 153") triggered by a signal (222, 223) from the first detection apparatus (22, 22', 122, 122') and by means of the address allocation (38, 138, 238, 238", 238") in response to a query response (226, 230, 264') of the second detection apparatus (26, 26', 26", 126, 126').

2. The device (2, 102) according to claim 1, **characterized in that** the first detection apparatus (22, 22', 122, 122') or the second detection apparatus (26, 26', 26", 126, 126') detects as the state a spatial coordinate (167, 167') or an operating state (60, 62).

3. The device (2, 102) according to one of the preceding claims,
**characterized in that**
the receiving station (46, 46', 46", 47, 47', 47", 53, 151, 153, 153', 153") is a mobile, portable receiver.

4. The device (2, 102) according to one of the preceding claims,
**characterized in that**
the third data transmission connection (157, 157", 157") is a personalized data transmission connection (157, 157', 157").

5. The device (2, 102) according claim 1, **characterized in that**
the state is a position (70, 71, 170, 171) of the object (17, 17', 17", 17^{III}, 17^{IV}, 18, 19, 19', 19", 19^{III}, 19^{IV}, 20) engageable by manual actuation, in particular a setting of the object (17, 17', 17", 17^{III}, 17^{IV}, 18, 19, 19', 19", 19^{III}, 19^{IV}, 20), such as a switch position (70, 170) or a lock position (71, 171) .

6. The device (2, 102) according to any of claims 2 to 4, **characterized in that** the operating state (60, 62) results in a loss of electrical or thermal energy which is available in the building (4, 4', 4").

7. The device (2, 102) according to claim 1,
**characterized in that**
the state can be expressed by a bimodal date, such as a spatial limitation (74), in particular geometrical or functional, adjustable via a control element (72, 172), in a section (7) of the building (4'), wherein in particular the spatial limitation (74) refers to an air transmission connection (75), a power transmission connection (76) or a data transmission connection (77).

8. The device (2, 102) according to one of the preceding claims,
**characterized in that**
at least one state pickup is provided, such as an electrical contact point (78, 178, 178'), a light barrier (80, 80', 180) or a control (81, 181), such as a thermostat (81), by which the state may be determined preferably by a sensor and may preferably be digitized as an electronic signal.

9. The device (2, 102) according to one of the preceding claims,
**characterized in that**
a database system (82, 82', 282) is provided that preferably contains the address allocation (38, 138), wherein a mapping event (264, 264') recognized by the data analysis apparatus (30, 130) in the database system (82, 82', 282) that is preferably connected to a second, preferably mobile, data storage unit (40, 140) may be stored in particular on the second data storage unit (40, 140) and may be read out in particular from the second data storage unit (40, 140).

10. The device (2, 102) according to one of the preceding claims,
**characterized in that**
the data analysis apparatus (30, 130) is connected to a time recording system (86, 186), wherein in the first data storage unit (36, 136) at least a time of day and preferably at least a calendar date is stored, wherein the allocation algorithm (34, 134) is initialized in an association match by comparing a time determined by the time recording system (86, 186), such as a current time of the day and in particular a current calendar date, such as a weekday, with the stored time of day and in particular the stored date.

11. The device (2, 102) according to one of the preceding claims,
**characterized in that**
the first detection apparatus (22, 22', 122, 122') comprises a presence control system (85, 185), such as a finger input system (152, 152', 152"), a time clock (86, 186), a biometric detection system (196, 196',197), such as an optical face recognition module (187), or a reader (189), e.g. for an optically structured field (93, 193), readable with electromagnetic waves, in particular with radio waves, or a transponder (189, 190, 191, 192).

12. The device (2, 102) according to one of the preceding claims,
**characterized in that**
the first detection apparatus (22, 22', 122, 122') includes a location determination device, such as a mobile radio system (194) or a transponder system (190), that operates with signal level measurements or signal propagation time measurements between a radio transmitter (191) and a radio tag (192), wherein a mobile radio device (46, 46', 46", 48, 48', 48") or the radio tag (192) (13, 14, 15) is uniquely attributable to a person.

13. The device (2, 102) according to one of the preceding claims,
**characterized in that**
the first detection apparatus (22, 22', 122, 122') is provided with an error correction module (23, 123), such as a redundancy checker.

14. The device (2, 102) according to one of the preceding claims,
**characterized in that**
the receiving station (46, 46', 46", 47, 47', 47", 53, 151, 153, 153', 153") is a laptop, a tablet PC (151), a smartphone (53, 153, 153', 153") or a paging receiver, such as a pager.

15. The device (2, 102) according to one of the preceding claims,
**characterized in that**
the object (19, 19') has a remote control module (195) controllable by the receiving station (46, 46', 46", 47, 47', 47", 53, 151, 153, 153', 153") by the data analysis apparatus (30, 130) via at least one data transmission connection (56, 56', 156, 156', 156", 156^{III}, 156^{IV}, 156^{V}, 156^{VI}, 157, 157', 157"), wherein the object (19, 19') may be moved by the remote control module (195) from a first operating state (60) into a second operating state (62), in particular an inactive state or a secured state (64).

16. The device (2, 102) according to one of the preceding claims,
**characterized in that**
at least one data transmission connection (56, 56', 155, 155', 156, 156', 156", 156^{III}, 156^{IV}, 156^{V}, 156^{VI}, 157, 157', 157") is a short-range wireless connection in a 2.4000 Gigahertz to 2.4835 gigahertz frequency band or in a 5.150 Gigahertz to 5.725 gigahertz frequency band, which in particular is named after King Bluetooth, with a range by which a size of a building complex (4, 4', 4", 6) can be covered, in particular a range of not more than 100 meters, preferably not more than 50 meters, wherein in particular a data transmission rate is not more than 3 megabit per second.

17. The device (2, 102) according to one of the preceding claims,
**characterized in that**
at least one data transmission connection (56, 56', 155, 155', 156, 156', 156", 156^{III}, 156^{IV}, 156^{V}, 156^{VI}, 157, 157', 157") comprises an infrared light emitter (196') and an infrared light detector (197) which are provided in particular for an infrared wavelength range of 850 nanometer to 2000 nanometer, and/or a microwave emitter (198, 198') and a microwave detector (199, 199', 199").

18. The device (2, 102) according to one of the preceding claims,
**characterized in that**
at least one data transmission connection (55, 155, 155', 56, 56', 156, 156', 156", 156^{III}, 156^{IV}, 156^{V}, 156^{VI}, 157, 157', 157") is password protected, wherein in particular a password for protecting data from an unauthorized access to the data, which are provided by the data transmission connection (55, 155, 155', 56, 56', 156, 156', 156", 156^{III}, 156^{IV}, 156^{V}, 156^{VI}, 157, 157', 157"), is present on the data analysis apparatus (30, 130) and on the receiving station (46, 46', 46", 47, 47', 47", 53, 151, 153, 153', 153").

19. The device (2, 102) according to one of the preceding claims,
**characterized in that**
the device (2, 102) forms part of a building security system (10, 10'), such as an emergency lighting system, and
serves in particular for monitoring an interior (7, 7', 7", 7^{III}) of a management (4) or administration building (4').

20. A method (203) for monitoring a building (4, 4', 4"),
wherein a first detection apparatus (22, 22', 122, 122') is present for detecting (222) a person (13, 14, 15) at least in one section (5, 6, 7, 7', 7", 7^{III}) of the building (4, 4', 4"), such as an exit section (9, 9') and/or an entrance section (8) of a building part (5) or of the building (4, 4', 4") or in the vicinity (6) to the building (4, 4', 4"), and
a program is running on an arithmetic unit (30, 130) connected with the first detection apparatus (22, 22', 122, 122') by which an identification (223) of the person (13, 14, 15) can be done in a personal data evaluation module (32, 132),
wherein the arithmetic unit (30, 130) is connected to a sender (42, 142, 142') for a data transmission to a receiver (46, 46', 46", 47, 47', 47", 53, 151, 153, 153', 153"),
**characterized in that**
the first detection apparatus (22, 22', 122, 122') is designed for an individual recognition of the person (13, 14, 15) based on at least one identifier and an address data field (38, 138) is stored in an electronic data memory (36, 40, 136, 140) of the arithmetic unit (30, 130),
wherein the address data field provides a relationship (234, 238, 238', 238") of personal data (169) enabling messaging to at least one person (13, 14, 15) with at least one unit to be monitored (17, 17', 17", 17^{III}, 17^{IV}, 18, 19, 19', 19", 19^{III}, 19^{IV}, 20) and offers a target state information (64, 264, 264') for the unit to be monitored (17, 17', 17", 17^{III}, 17^{IV}, 18, 19, 19', 19", 19^{III}, 19^{IV}, 20), wherein to the person (13, 14, 15) data of an area of responsibility or a task area is specified, and
the arithmetic unit (30, 130) requests the personal data (169, 223) of the person (13, 14, 15) identified in the personal data evaluation module (32, 132), and
at least one operating state (60, 62) is determined for the unit to be monitored (17, 17', 17", 17^{III}, 17^{IV}, 18, 19, 19', 19", 19^{III}, 19^{IV}, 20) assignable to the person (13, 14, 15) by the arithmetic unit (30, 130, 234) via at least a second detection apparatus (26, 26', 26", 126, 126', 226, 230) connected to the arithmetic unit (30, 130), and
when finding (230, 234) an operating state (264') deviating from the target state information (64) of the unit to be monitored (17, 17', 17", 17^{III}, 17^{IV}, 18, 19, 19', 19", 19^{III}, 19^{IV}, 20) an alarm condition signal (66, 68, 68', 68", 68^{III}, 166, 167, 167', 168) is sent by the arithmetic unit (30, 130) as a notification via the sender (42, 142, 142') to at least one receiver (46, 46', 46", 47, 47', 47", 53, 151, 153, 153', 153", 250, 250', 266, 266') associated with the person (13, 14, 15) via the personal data.

21. The method (203) according to claim 20, **characterized in that**
the receiver (46, 46', 46", 47, 47', 47", 53, 151, 153, 153', 153", 250, 250', 266, 266') includes a transmission module (48, 48', 48") and the arithmetic unit (30, 130) is connected to a feedback receiver (44, 144, 144') for the transmission module (48, 48', 48"), wherein an alarm condition signal (66, 68, 68', 68", 68^{III}, 166, 167, 167', 168) can be confirmed by the person (13, 14, 15) via the transmission module (48, 48', 48") as signal reception (A) or as false alarm (C).

22. The method (203) according to claim 20 or 21, **characterized in that**
the first detection apparatus (122, 122') performs a first location determination by a lateration or an angulation, preferably a trilateration or a triangulation (194), of at least one person (13, 14, 15).

23. The method (203) according to one of the claims 20 to 22, **characterized in that**
the alarm condition signal (66, 68, 68', 68", 68^{III}, 166, 167, 167', 168) comprises, preferably present in the address data field (38, 138), a name of the unit to be monitored (17, 17', 17", 17^{III}, 17^{IV}, 18, 19, 19', 19", 19^{III}, 19^{IV}, 20) and in particular an indication of a location (167, 167') of the unit to be monitored (17, 17', 17", 17^{III}, 17^{IV}, 18, 19, 19', 19", 19^{III}, 19^{IV}, 20), wherein preferably this information can be displayed by the receiver (46, 46', 46", 47, 47', 47", 53, 151, 153, 153', 153", 250, 250', 266, 266').

24. The method (203) according to one of the claims 20 to 23, **characterized in that**
the alarm condition signal (66, 68, 68', 68", 68^{III}, 166, 167, 167', 168) is transmitted in predeterminable time intervals and is converted preferably in at least one acoustic, optical or haptic level change of an output unit (50, 50', 50", 50^{III}, 50^{IV}, 150, 150', 150") of the receiver (46, 46', 46", 47, 47', 47", 53, 151, 153, 153', 153", 250, 250', 266, 266').

25. The method (203) according to one of the claims 20 to 24, **characterized in that**
the person (13, 14, 15) is a first person (13), wherein the receiver (46, 153, 250, 266) associated with the first person (13) establishes an inquiry connection (157, 244) through the transmission module (48) to the feedback receiver (44, 144'), whereby the arithmetic unit (30, 130) is caused to conduct the alarm condition signal (66, 68, 68', 68", 68^{III}, 166, 167, 167', 168) to a second receiver (46', 46", 47, 47', 47", 53, 151, 153', 153", 250', 266') of a second person (14, 15) who is provided in the address data field (38, 138) as a proxy, in particular a first proxy, of the first person (13),
wherein the alarm condition signal is a first alarm condition signal (66, 166, 167) that is only then ended by the arithmetic unit (30, 130), if with aid of the first detection apparatus (22, 22', 122, 122') a whereabouts of the second person (14, 15) in the building (4, 4') is confirmed and a reception (A) of a second alarm condition signal (68, 68', 68", 68^{III}, 167', 168) was confirmed at the second receiver (46', 46", 47, 47', 47", 53, 151, 153', 153", 250', 266'), which includes a second transmission module (48', 48"), to the arithmetic unit (30, 130).

26. The method (203) according to claim 25, **characterized in that**
the second alarm condition signal (68, 68', 68", 68^{III}, 167', 168) includes a sender identification (169) which is output by the second receiver (46', 46", 47, 47', 47", 53, 151, 153', 153", 250', 266'), wherein the first person (13) is identifiable by the sender identification (169), and in particular a rejection (B) of the second alarm condition signal (66, 68, 68', 68", 68^{III}, 166, 167, 167', 168) can take place via a second inquiry connection (157', 157" 244) of the second receiver (46', 46", 47, 47', 47", 53, 151, 153', 153", 250', 266').

27. The method (203) according to one of the claims 20 to 26, **characterized in that**
via a transmission module (48, 48', 48") of a receiving unit (46, 46', 46", 47, 47', 47", 53, 151, 153, 153', 153", 250, 250', 266, 266') in conjunction with the arithmetic unit (30, 130) an absence indicator (D) may be set for a person (13, 14, 15) in the address data field (38, 138), wherein the arithmetic unit (30, 130) selects from a subgroup or from an entirety of the personal data of a plurality of persons (13, 14, 15) included in the address data field (38, 138) another person (13, 14, 15), in particular with the aid of a presence control of persons (85, 185) by the first detection apparatus (22, 22', 122, 122'), and sends another alarm condition signal (66, 68, 68', 68", 68^{III}, 166, 167, 167', 168) to another receiver (46, 46', 46", 47, 47', 47", 53, 151, 153, 153', 153", 250, 250', 266, 266').

28. The method (203) according to one of the claims 20 to 27, **characterized in that**
the arithmetic unit (30, 130) sends out an emergency call (11) via the Sender (42, 142, 142') if the unit to be monitored (17, 17', 17", 17^{III}, 17^{IV}, 18, 19, 19', 19", 19^{III}, 19^{IV}, 20) contains an emergency call indicator in the address data field (38, 138) and in particular a confirmation (A) of the receipt of the alarm condition signal (66, 68, 68', 68", 68^{III}, 166, 167, 167', 168) in a given time interval has not been noted by the arithmetic unit (30, 130).

29. The method (203) according to one of the claims 20 to 28, **characterized in that**
all alarm condition signals (66, 68, 68', 68", 68^{III}, 166, 167, 167', 168) together with the operating state (60, 62, 264, 264') and with at least a person's date (169, 223) are stored in a database system (82, 82', 282) and can be analyzed for a predetermined period of time after an alarm frequency (A, B), such as a false alarm frequency (C).

30. The method (203) according to one of the claims 20 to 29, **characterized in that** the address data field (38, 138) has a target state information (64, 264, 264') for each unit to be monitored (17, 17', 17", 17^{III}, 17^{IV}, 18, 19, 19', 19", 19^{III}, 19^{IV}, 20) .

31. The method (203) according to one of the claims 20 to 30, **characterized in that**
the method is performed with a device (2, 102) according to one the claims 1 to 19.

## Revendications

1. Dispositif (2, 102) pour la surveillance d'un bâtiment (4, 4', 4^{II}) qui peut être fréquenté par au moins une personne (13, 14, 15), cependant que le dispositif (2, 102) présente dans une zone du bâtiment (6) au moins un premier dispositif de détection (22, 22^{I}, 122, 122^{I}) et au moins un second dispositif de détection (26, 26', 26", 126, 126') qui détecte au moins un état d'au moins un objet (17, 17', 17^{II}, 17^{III}, 17^{IV}, 18, 19, 19', 19^{II}, 19^{III}, 19^{IV}, 20) associé au bâtiment (4, 4', 4^{II}), cependant qu'un composant du dispositif (2, 102) est un dispositif d'analyse de données (30, 130) qui est dans une première relation de transmission de données (55, 155, 155') avec le premier dispositif de détection (22, 22^{I}, 122, 122^{I}) et qui peut établir une seconde relation de transmission de données (56, 56', 156, 156', 156", 156^{III}, 156^{IV}, 156^{V}, 156^{VI}) vers le second dispositif de détection (26, 26', 26", 126, 126') et le dispositif d'analyse de données (30, 130) comprend une première unité de stockage de données (36, 136) et est équipé d'un dispositif d'émission (42, 142, 142') qui rend possible une transmission de signal à une station de réception (46, 46, 46", 47, 47', 47", 53, 151, 153, 153', 153"), cependant que la station de réception (46, 46, 46", 47, 47', 47", 53, 151, 153, 153', 153") est associée à une seule personne, en particulier à la seule personne (13, 14, 15),
**caractérisé en ce que** le premier dispositif de détection (22, 22^{I}, 122, 122^{I}) est configuré pour une reconnaissance individuelle de la personne (13, 14, 15) à l'aide d'au moins un signe de reconnaissance et que l'unité de stockage de données (36, 136) présente une attribution d'adresse (38, 138) de l'objet (17, 17', 17^{II}, 17^{III}, 17^{IV}, 18, 19, 19', 19^{II}, 19^{III}, 19^{IV}, 20) à au moins une personne (13, 14, 15) pour laquelle des données d'un domaine de compétence ou d'un domaine d'activité sont fixées et le dispositif d'analyse de données (30, 130) est doté d'un algorithme d'attribution (34, 134) qui est prévu pour établir une troisième relation de transmission de données (157, 157', 157^{II}) du dispositif d'émission (42, 142, 142') à la station de réception (46, 46, 46", 47, 47', 47", 53, 151, 153, 153', 153"), déclenchée par un signal (222, 223) du premier dispositif de détection (22, 22^{I}, 122, 122^{I}) et au moyen de l'attribution d'adresse (38, 138, 238, 238', 238") en réaction à une réponse à une interrogation (226, 230, 264') du second dispositif de détection (26, 26', 26", 126, 126').

2. Dispositif (2, 102) selon la revendication 1, **caractérisé en ce que** le premier dispositif de détection (22, 22^{I}, 122, 122^{I}) ou le second dispositif de détection (26, 26', 26", 126, 126') comprend une coordonnée spatiale (167, 167') ou détecte un état de fonctionnement (60, 62) comme étant l'état.

3. Dispositif (2, 102) selon l'une des revendications précédentes, **caractérisé en ce que** la station de réception (46, 46, 46", 47, 47', 47", 53, 151, 153, 153', 153") est un appareil de réception mobile portatif.

4. Dispositif (2, 102) selon la revendications précédentes, **caractérisé en ce que** la troisième relation de transmission de données (157, 157', 157^{II}) est une relation de transmission de données personnalisée (157, 157', 157^{II}).

5. Dispositif (2, 102) selon la revendication 1, **caractérisé en ce que** l'état est une position (70, 71, 170, 171) qui peut être prise par un actionnement manuel, en particulier un réglage, de l'objet (17, 17', 17^{II}, 17^{III}, 17^{IV}, 18, 19, 19', 19^{II}, 19^{III}, 19^{IV}, 20) comme une position de commutateur (70, 170) ou une position de serrure (71, 171).

6. Dispositif (2, 102) selon l'une des revendications 2 à 4, **caractérisé en ce que** l'état de fonctionnement (60, 62) va de pair avec une perte d'énergie électrique ou thermique qui est disponible dans le bâtiment (4, 4', 4^{II})

7. Dispositif (2, 102) selon la revendication 1, **caractérisé en ce que** l'état peut être exprimé par une donnée bimodale comme une limitation spatiale (74), en particulier géométrique ou fonctionnelle, qui peut être réglée par un élément de commande (72, 172) dans une zone (7) du bâtiment (4'), cependant qu'en particulier la limitation spatiale (74) concerne une relation de transmission aéroportée (75), une relation de transmission électrique (76) ou une relation de transmission de données (77).

8. Dispositif (2, 102) selon l'une des revendications précédentes, **caractérisé en ce qu'**il est prévu au moins un détecteur d'état comme un point de contact électrique (78, 178, 178'), une barrière photoélectrique (80, 80', 180') ou une commande (81, 181), comme un thermostat (81), qui permet de déterminer l'état, de préférence de manière sensorielle, et de préférence de le numériser en tant que signal électronique.

9. Dispositif (2, 102) selon l'une des revendications précédentes, **caractérisé en ce qu'**il est prévu un système de banque de données (82, 82', 282) qui contient de préférence l'attribution d'adresse (38, 138), cependant qu'un événement d'attribution (264, 264') reconnu par le dispositif d'analyse de données (30, 130) dans le système de banque de données (82, 82', 282) qui est de préférence relié à une seconde unité de stockage de données (40, 140), de préférence mobile, peut être mémorisé en particulier sur la seconde unité de stockage de données (40, 140) et peut être lu en particulier à partir de la seconde unité de stockage de données (40, 140).

10. Dispositif (2, 102) selon l'une des revendications précédentes, **caractérisé en ce que** le dispositif d'analyse de données (30, 130) est relié à un système de saisie de temps (86, 186), cependant qu'au moins une heure et de préférence au moins une date de calendrier sont mémorisées dans la première unité de stockage de données (36, 136), cependant que l'algorithme d'attribution (34, 134) est initialisé par une comparaison d'un temps déterminé par le système de saisie de temps (86, 186) comme une heure actuelle et en particulier une date de calendrier actuelle, comme un jour de la semaine, avec l'heure mémorisée et en particulier la date mémorisée avec une concordance de l'attribution.

11. Dispositif (2, 102) selon l'une des revendications précédentes, **caractérisé en ce que** le premier dispositif de détection (22, 22^{I}, 122, 122^{I}) comprend un système de contrôle de présence (85, 185) comme un système de saisie tactile (152, 152', 152"), une pointeuse (86, 186), un système de saisie biométrique (196, 196', 197) comme un module optique de reconnaissance faciale (187) ou un appareil de lecture (189), par exemple pour un champ à structure optique (93, 193) pouvant être lu avec des ondes électromagnétiques, en particulier des ondes radio, ou un transpondeur (189, 190, 191, 192).

12. Dispositif (2, 102) selon l'une des revendications précédentes, **caractérisé en ce que** le premier dispositif de détection (22, 22^{I}, 122, 122^{I}) comprend un dispositif de localisation comme un système de radiotéléphone (194) ou un système de transpondeur (190) qui travaille avec des mesures de niveau de signal ou des mesures de temps de propagation de signal entre un émetteur radio (191) et une radio-étiquette (192), cependant qu'un téléphone mobile (46, 46', 46", 48, 48^{I}, 48") ou l'étiquette radio (192) peut être attribuée de manière univoque à une personne (13, 14, 15).

13. Dispositif (2, 102) selon l'une des revendications précédentes, **caractérisé en ce que** le premier dispositif de détection (22, 22^{I}, 122, 122^{I}) est équipé d'un module de correction d'erreurs (23, 123) comme un vérificateur de redondance.

14. Dispositif (2, 102) selon l'une des revendications précédentes, **caractérisé en ce que** la station de réception (46, 46', 46", 47, 47', 47", 53, 151, 153, 153', 153") est un ordinateur portable, une tablette (151), un smartphone (53, 153, 153', 153") ou un récepteur d'appel de personne comme un téléavertisseur.

15. Dispositif (2, 102) selon l'une des revendications précédentes, **caractérisé en ce que** l'objet (19, 19') présente un module de télécommande (195) qui peut être commandé par la station de réception (46, 46', 46", 47, 47', 47", 53, 151, 153, 153', 153") par le dispositif d'analyse de données (30, 130) par au moins une relation de transmission de données (56, 56', 156, 156', 156", 156^{III}, 156^{IV}, 156^{V}, 156^{VI}, 157, 157', 157"), cependant que l'objet (19, 19') peut être amené par le module de télécommande (195) d'un premier état de fonctionnement (60) à un second état de fonctionnement (62), en particulier un état de repos ou un état sécurisé (64).

16. Dispositif (2, 102) selon l'une des revendications précédentes, **caractérisé en ce qu'**au moins une relation de transmission de données (56, 56', 156, 156', 156", 156^{III}, 156^{IV}, 156^{V}, 156^{VI}, 157, 157', 157^{II}) est une liaison radio à faible portée dans une bande de fréquence de 2,4000 gigahertz à 2,4835 gigahertz ou dans une bande de fréquence de 5,150 gigahertz à 5,725 gigahertz qui est nommée en particulier d'après un roi danois (Bluetooth), avec une portée qui permet de couvrir la taille d'un complexe de bâtiment (4, 4', 4^{II}, 6), en particulier une portée de pas plus de 100 mètres, de préférence de pas plus de 50 mètres, cependant qu'une vitesse de transfert de données n'est pas de plus de 3 mégabits par seconde.

17. Dispositif (2, 102) selon l'une des revendications précédentes, **caractérisé en ce qu'**au moins une relation de transmission de données (56, 56', 156, 156', 156", 156^{III}, 156^{IV}, 156^{V}, 156^{VI}, 157, 157', 157^{II}) comprend un émetteur de lumière infrarouge (196') et un détecteur de lumière infrarouge (197) qui sont prévus en particulier pour une gamme de longueur d'onde infrarouge de 850 nanomètres à 2000 nanomètres et/ou un émetteur de micro-ondes (198, 198') et un détecteur de micro-ondes (199, 199', 199").

18. Dispositif (2, 102) selon l'une des revendications précédentes, **caractérisé en ce qu'**au moins une relation de transmission de données (56, 56', 156, 156', 156", 156^{III}, 156^{IV}, 156^{V}, 156^{VI}, 157, 157', 157^{II}) est protégée par un mot de passe, cependant qu'il existe en particulier un mot de passe pour une protection de données contre un accès non autorisé aux données qui sont mises à disposition par la relation de transmission de données (56, 56', 156, 156', 156", 156^{III}, 156^{IV}, 156^{V}, 156^{VI}, 157, 157', 157^{II}) sur le dispositif d'analyse de données (30, 130) et sur la station de réception (46, 46', 46", 47, 47', 47", 53, 151, 153, 153', 153").

19. Dispositif (2, 102) selon l'une des revendications précédentes, **caractérisé en ce que** le dispositif (2, 102) forme une partie d'un système de sécurité du bâtiment (10, 10') comme un système d'éclairage de secours et sert en particulier à la surveillance d'une zone intérieure (7, 7', 7", 7^{III}) d'un bâtiment administratif (4) ou d'un bâtiment commercial (4').

20. Procédé (203) pour la surveillance d'un bâtiment (4, 4', 4^{II}), cependant qu'il existe un premier dispositif de détection (22, 22^{I}, 122, 122^{I}) pour la détection (222) d'une personne (13, 14, 15) au moins dans une zone (5, 6, 7, 7', 7", 7^{III}) du bâtiment (4, 4', 4^{II}) comme une zone de sortie (9, 9^{I}) et/ou une zone d'entrée (8) d'une partie de bâtiment (5) ou du bâtiment (4, 4', 4^{II}) ou comme au voisinage (6) du bâtiment (4, 4', 4^{II}) et qu'un programme, grâce auquel une identification (223) de la personne (13, 14, 15) peut être effectuée dans un module d'analyse des données de personnes (32, 132), travaille sur une unité de calcul (30, 130) reliée au premier dispositif de détection (22, 22^{I}, 122, 122^{I}), cependant que l'unité de calcul (30, 130) est reliée à un émetteur (42, 142, 142') pour une transmission de données à un appareil de réception (46, 46', 46", 47, 47', 47", 53, 151, 153, 153', 153"),
**caractérisé en ce que**
le premier dispositif de détection (22, 22^{I}, 122, 122^{I}) est conçu pour une identification individuelle de la personne (13, 14, 15) à l'aide d'au moins un signe d'identification et un champ de données d'adresse (38, 138) est mémorisé dans une mémoire de données électronique (36, 40, 136, 140) de l'unité de calcul (30, 130), champ qui met à disposition une relation (234, 238, 238', 238") de données de personne (169) qui permettent une transmission de messages à au moins une personne (13, 14, 15), avec au moins une unité à surveiller (17, 17', 17^{II}, 17^{III}, 17^{IV}, 18, 19, 19', 19^{II}, 19^{III}, 19^{IV}, 20,) et une information d'état de consigne (64, 264, 264') au sujet de l'unité à surveiller (17, 17', 17^{II}, 17^{III}, 17^{IV}, 18, 19, 19', 19^{II}, 19^{III}, 19^{IV}, 20), cependant que des données d'un domaine de compétence ou d'un domaine d'activité sont fixées pour la personne (13, 14, 15) et l'unité de calcul (30, 130) interroge les données de personne (169, 223) de la personne (13, 14, 15) identifiée dans le module d'analyse des données de personnes (32, 132) et qu'au moins un état de fonctionnement (60, 62) pour l'unité à surveiller (17, 17', 17^{II}, 17^{III}, 17^{IV}, 18, 19, 19', 19^{II}, 19^{III}, 19^{IV}, 20), pouvant être associée à la personne (13, 14, 15) est déterminé par l'unité de calcul (30, 130) par au moins un second dispositif de détection (26, 26', 26", 126, 126', 226, 230) relié à l'unité de calcul (30, 130), et lors de la détection (230, 234) d'un état de fonctionnement (264') de l'unité à surveiller (17, 17', 17^{II}, 17^{III}, 17^{IV}, 18, 19, 19', 19^{II}, 19^{III}, 19^{IV}, 20) qui dévie de l'information d'état de consigne (64), un signal d'état d'alarme (66, 68, 68^{I}, 68^{II}, 68^{III}, 166, 167, 167', 168) est envoyé par l'unité de calcul (30, 130) comme notification par l'émetteur (42, 142, 142') à au moins un appareil de réception (46, 46', 46", 47, 47', 47", 53, 151, 153, 153', 153", 250, 250', 266, 266') associé à la personne (13, 14, 15) par les données de personne.

21. Procédé (203) selon la revendication 20, **caractérisé en ce que** l'appareil de réception (46, 46', 46", 47, 47', 47", 53, 151, 153, 153', 153", 250, 250', 266, 266') comprend un module d'émission (48, 48', 48") et l'unité de calcul (30, 130) est reliée à un récepteur de réponse de retour (44, 144, 144') pour le module d'émission (48, 48', 48"), cependant qu'un signal d'état d'alarme (66, 68, 68^{I}, 68^{II}, 68^{III}, 166, 167, 167', 168) peut être actionné par la personne (13, 14, 15) par le module d'émission (48, 48', 48") comme réception de signal (A) ou comme fausse alarme (C).

22. Procédé (203) selon la revendication 20 ou 21, **caractérisé en ce que** le premier dispositif de détection (122, 122^{I}) exécute une première localisation par une latération ou une angulation, de préférence par une trilatération ou une triangulation (194), d'au moins une personne (13, 14, 15).

23. Procédé (203) selon l'une des revendications 20 à 22, **caractérisé en ce que** le signal d'état d'alarme (66, 68, 68^{I}, 68^{II}, 68^{III}, 166, 167, 167', 168) comprend une désignation de l'unité à surveiller (17, 17', 17^{II}, 17^{III}, 17^{IV}, 18, 19, 19', 19^{II}, 19^{III}, 19^{IV}, 20), de préférence existante dans le champ de données d'adresse (38, 138), et en particulier une indication d'un emplacement (167, 167') de l'unité à surveiller (17, 17', 17^{II}, 17^{III}, 17^{IV}, 18, 19, 19', 19^{II}, 19^{III}, 19^{IV}, 20), cependant que de préférence ces informations peuvent être affichées par l'appareil de réception (46, 46', 46", 47, 47', 47", 53, 151, 153, 153', 153", 250, 250', 266, 266').

24. Procédé (203) selon l'une des revendications 20 à 23, **caractérisé en ce que** le signal d'état d'alarme (66, 68, 68^{I}, 68^{II}, 68^{III}, 166, 167, 167', 168) est émis à des intervalles qui peuvent être prédéterminés et est converti de préférence en au moins une variation de niveau acoustique, optique ou haptique d'une unité de sortie (50, 50', 50", 50^{III}, 50^{IV}, 150, 150', 150") de l'appareil de réception (46, 46', 46", 47, 47', 47", 53, 151, 153, 153', 153", 250, 250', 266, 266').

25. Procédé (203) selon l'une des revendications 20 à 24, **caractérisé en ce que** la personne (13, 14, 15) est une première personne (13), cependant que l'appareil de réception (46, 153, 350, 266) attribué à la première personne (13) établit une liaison de demande de confirmation (157, 244) par le module d'émission (48) avec le récepteur de réponse de retour (44, 144') si bien que l'unité de calcul (30, 130) est amenée à diriger le signal d'état d'alarme (66, 68, 68^{I}, 68^{II}, 68^{III}, 166, 167, 167', 168) à un second appareil de réception (46, 46', 46", 47, 47', 47", 53, 151, 153, 153', 153", 250, 250', 266, 266') d'une seconde personne (14, 15) qui est prévue dans le champ de données d'adresse (38, 138) comme représentant, en particulier comme premier représentant, de la première personne (13), cependant que le signal d'état d'alarme est un premier signal d'état d'alarme (66, 166, 167) qui n'est terminé par l'unité de calcul (30, 130) que lorsqu'un lieu de séjour de la seconde personne (14, 15) dans le bâtiment (4, 4') est confirmé à l'aide des premiers dispositifs de détection (22, 22^{I}, 122, 122^{I}) et qu'une prise en charge (A) d'un second signal d'état d'alarme (66, 68, 68^{I}, 68^{II}, 68^{III}, 166, 167, 167', 168) au niveau du second appareil de réception (46, 46', 46", 47, 47', 47", 53, 151, 153, 153', 153", 250, 250', 266, 266'), qui comprend un second module d'émission (48^{I}, 48"), envoyé à l'unité de calcul (30, 130) a été confirmé.

26. Procédé (203) selon la revendication 25, **caractérisé en ce que** le second signal d'état d'alarme (66, 68, 68^{I}, 68^{II}, 68^{III}, 166, 167, 167', 168) comprend une identification d'expéditeur (169) qui est envoyée par le second appareil de réception (46, 46', 46", 47, 47', 47", 53, 151, 153, 153', 153", 250, 250', 266, 266'), cependant que la première personne (13) peut être identifiée par l'identification d'expéditeur (169) et en particulier un refus (B) du second signal d'état d'alarme (66, 68, 68^{I}, 68^{II}, 68^{III}, 166, 167, 167', 168) peut être effectué par une seconde liaison de demande de confirmation (157', 157^{II}, 244) du second appareil de réception (46, 46', 46", 47, 47', 47", 53, 151, 153, 153', 153", 250, 250', 266, 266').

27. Procédé (203) selon l'une des revendications 20 à 26, **caractérisé en ce qu'**un indicateur d'absence (D) peut être fixé pour une personne (13, 14, 15) dans le champ de données d'adresse (38, 138) par un module d'émission (48, 48^{I}, 48") d'une unité de réception (46, 46', 46", 47, 47', 47", 53, 151, 153, 153', 153", 250, 250', 266, 266') en relation avec l'unité de calcul (30, 130), cependant que l'unité de calcul (30, 130) sélectionne une autre personne (13, 14, 15) dans un sous-groupe ou un ensemble de données de personne contenues dans le champ de données d'adresse (38, 138) d'une multitude de personnes (13, 14, 15), en particulier à l'aide d'un contrôle de présence de personne (85, 185) par le premier dispositif de détection (22, 22^{I}, 122, 122^{I}) et envoie un autre signal d'état d'alarme (66, 68, 68^{I}, 68^{II}, 68^{III}, 166, 167, 167', 168) à un autre appareil de réception (46, 46', 46", 47, 47', 47", 53, 151, 153, 153', 153", 250, 250', 266, 266').

28. Procédé (203) selon l'une des revendications 20 à 27, **caractérisé en ce que** l'unité de calcul (30, 130) émet un appel d'urgence (11) par l'émetteur (42, 142, 142') lorsque l'unité à surveiller (17, 17', 17^{II}, 17^{III}, 17^{IV}, 18, 19, 19', 19", 19^{II}, 19^{IV}, 20) contient un indicateur d'appel d'urgence dans le champ de données d'adresse (38, 138) et en particulier lorsqu'une confirmation (A) de la réception du signal d'état d'alarme (66, 68, 68^{I}, 68^{II}, 68^{III}, 166, 167, 167', 168) n'a pas été enregistrée par l'unité de calcul (30, 130) dans un intervalle de temps prédéfini.

29. Procédé (203) selon l'une des revendications 20 à 28, **caractérisé en ce que** tous les signaux d'état d'alarme (66, 68, 68^{I}, 68^{II}, 68^{III}, 166, 167, 167', 168) sont mémorisés dans un système de banque de données (82, 82', 282) avec l'état de fonctionnement (60, 62, 264, 264') et avec au moins une donnée de personne (169, 223) et peuvent être analysés pendant une période de temps prédéfinie après une fréquence de survenance de l'alarme (A, B) comme une fréquence de survenance de fausse alarme (C).

30. Procédé (203) selon l'une des revendications 20 à 29, **caractérisé en ce que** le champ de données d'adresse (38, 138) présente une information d'état de consigne (64, 264, 264') pour chaque unité à surveiller (17, 17', 17^{II}, 17^{III}, 17^{IV}, 18, 19, 19', 19^{II}, 19^{III}, 19^{IV}, 20).

31. Procédé (203) selon l'une des revendications 20 à 30, **caractérisé en ce que** le procédé est exécuté avec un dispositif (2, 102) selon l'une des revendications 1 à 19.
